(19) Europäisches Patentamt / European Patent Office / Office européen des brevets

(11) **EP 4 336 414 B1**

(12) **EUROPEAN PATENT SPECIFICATION**

(45) Date of publication and mention
of the grant of the patent:
**04.03.2026 Bulletin 2026/10**

(21) Application number: **22306327.2**

(22) Date of filing: **07.09.2022**

(51) International Patent Classification (IPC):
**G06N 10/20** (2022.01)        **G06N 10/70** (2022.01)
**G06N 10/40** (2022.01)

(52) Cooperative Patent Classification (CPC):
**G06N 10/20; G06N 10/70;** G06N 10/40

(54) **FAULT TOLERANT PREPARATION OF QUANTUM POLAR CODES**

FEHLERTOLERANTE HERSTELLUNG VON QUANTENPOLARCODES

PRÉPARATION TOLÉRANTE AUX DÉFAILLANCES DE CODES POLAIRES QUANTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.03.2024 Bulletin 2024/11**

(73) Proprietors:
• **Commissariat à l'Energie Atomique et aux
Energies
Alternatives
75015 Paris (FR)**
• **Université Grenoble Alpes
38400 Saint-Martin-d'Hères (FR)**
• **Institut Polytechnique de Grenoble
38000 Grenoble (FR)**
• **CENTRE NATIONAL DE LA RECHERCHE
SCIENTIFIQUE
75794 Paris Cedex 16 (FR)**

(72) Inventors:
• **SAVIN, Valentin
38054 Grenoble Cedex 09 (FR)**
• **GOSWAMI, Ashutosh-Kumar
38054 Grenoble Cedex 09 (FR)**
• **MHALLA, Mehdi
38100 Grenoble (FR)**

(74) Representative: **Santarelli
Tour Trinity
1 bis Place de la Défense
92400 Courbevoie (FR)**

(56) References cited:
• **ZUNAIRA BABAR ET AL: "Polar Codes and Their
Quantum-Domain Counterparts", ARXIV.ORG,
CORNELL UNIVERSITY LIBRARY, 201 OLIN
LIBRARY CORNELL UNIVERSITY ITHACA, NY
14853, 1 September 2019 (2019-09-01),
XP081479409, DOI: 10.1109/
COMST.2019.2937923**
• **EARL T CAMPBELL ET AL: "The Steep Road
Towards Robust and Universal Quantum
Computation", ARXIV.ORG, CORNELL
UNIVERSITY LIBRARY, 201 OLIN LIBRARY
CORNELL UNIVERSITY ITHACA, NY 14853, 21
December 2016 (2016-12-21), XP080742208**

**Description**

**FIELD OF THE INVENTION**

The present invention concerns the field of quantum computation and more particularly of fault tolerant preparation of quantum error correcting code states. It relates more specifically to a system and a method of preparation of quantum polar code states for fault tolerant quantum computation.

**BACKGROUND OF THE INVENTION**

Quantum computers make use of quantum phenomena such as superposition and entanglement to perform computation. Through precise control of these phenomena, it is in principle possible for quantum computers to outperform their classical counterparts. Quantum computation is based on the manipulation of quantum bits or "qubits" which can be regarded as a superposition of the 1 and 0 states of a quantum physical variable.

A qubit is the basic unit of quantum information, also called quantum state $|\psi\rangle$ which corresponds to a superposition of basis states $|0\rangle$ and $|1\rangle$, as follows:

$$|\psi\rangle = \alpha|0\rangle + \beta|1\rangle \tag{1}$$

where $\alpha$ and $\beta$ are complex numbers satisfying the normalization constraint, $|\alpha|^2 + |\beta|^2 = 1$. The quantum state $|\psi\rangle$ is a vector in a complex linear vector space, known as the Hilbert space. The set $\{|0\rangle, |1\rangle\}$ is an orthogonal basis of the Hilbert state, known as the computational basis. This basis is not unique. For example, another important basis is the phase basis, which corresponds to the set $\{|+\rangle, |-\rangle\}$, where $|+\rangle$ and $|-\rangle$ are orthogonal vectors defined as follows:

$$|+\rangle := \frac{|0\rangle + |1\rangle}{\sqrt{2}}, \qquad |-\rangle := \frac{|0\rangle - |1\rangle}{\sqrt{2}} \tag{2}$$

A qubit $|\psi\rangle$ can also be written as a superposition of basis states $|+\rangle$ and $|-\rangle$. The quantum state or qubit $|\psi\rangle$ in Eq. (1) can be expressed in the phase basis, as follows:

$$|\psi\rangle = \frac{\alpha + \beta}{\sqrt{2}} |+\rangle + \frac{\alpha - \beta}{\sqrt{2}} |-\rangle \tag{3}$$

The basis states can be extended to $N$ qubits, where $N > 1$, by tensor product. For a binary vector $\boldsymbol{u} = (u_1, ..., u_N) \in \{0, 1\}^N$, let $|\boldsymbol{u}\rangle = |(u_1, ..., u_N)\rangle := |u_1\rangle \otimes ... \otimes |u_N\rangle$. Then, the set $\{ |\boldsymbol{u}\rangle \mid \boldsymbol{u} \in \{0, 1\}^N \}$ is the computational basis on $N$ qubits.
Any $N$ qubit quantum state can be written as a superposition of the $N$ qubit computational basis states:

$$|\psi\rangle = \sum_{\boldsymbol{u} \in \{0,1\}^N} \alpha_{\boldsymbol{u}} |\boldsymbol{u}\rangle, \tag{4}$$

where $\alpha_{\boldsymbol{u}}$ are complex numbers satisfying the normalization condition $\Sigma_{\boldsymbol{u}} |\alpha_{\boldsymbol{u}}|^2 = 1$. Similarly, the quantum state $|\psi\rangle$ can also be written as superposition of $N$ qubit phase basis states, which are tensor products of $|+\rangle$ and $|-\rangle$ states.
A quantum state $|\psi\rangle$ on $N$ qubits is said to be entangled if it is not possible to write $|\psi\rangle$ as a tensor product of $N$ single qubit quantum states, that is:

$$|\psi\rangle \neq |\psi_1\rangle \otimes |\psi_2\rangle \otimes \cdots \otimes |\psi_N\rangle \tag{5}$$

where $|\psi_1\rangle, |\psi_2\rangle, ..., |\psi_N\rangle$ are single qubit states. Hence, entanglement refers to correlation between parts of a quantum system. It is a peculiar property of quantum systems, as it does not have a classical counterpart.
The processing of quantum information is performed by applying quantum gates on qubits. Some examples of these quantum gates are Pauli, Hadamard, and CNOT gates.
Pauli gates are a set of four quantum gates, denoted by $I, X, Y, Z,$ which act on a single qubit. Their action in the computational basis is as follows:

$$I|0\rangle = |0\rangle, \qquad I|1\rangle = |1\rangle \tag{6}$$

$$X|0\rangle = |1\rangle, \qquad X|1\rangle = |0\rangle \tag{7}$$

$$Z|0\rangle = |0\rangle, \qquad Z|1\rangle = -|1\rangle \tag{8}$$

$$Y|0\rangle = i|1\rangle, \qquad Y|1\rangle = -i|0\rangle \tag{9}$$

Note that $Y = i\,ZX$, and $X^2 = Y^2 = Z^2 = I$, where $I$ is the identity operator in Eq. (6). From Eq. (7), Pauli $X$ acts like a NOT gate in the computational basis. From Eq. (8), it also follows that $Z|+\rangle = |-\rangle$ and $Z|-\rangle = |+\rangle$, hence Pauli $Z$ acts like a NOT gate in the phase basis.

Pauli gates are extended to act on $N$ qubits by tensor product. For example, $X \otimes Z$ is a Pauli operator on two qubits.

Let $\bar{\mathcal{G}}_N$ be the set of all Pauli operators on $N$ qubits, and $\mathcal{G}_N := \{\pm 1, \pm i\} \times \bar{\mathcal{G}}_N$, the set of Pauli operators possibly with a $\pm 1$ or $\pm i$ sign. Then $\mathcal{G}_N$ is a mathematical group, which is

referred to as the $N$-qubit Pauli group. It is worth noting here that any two elements $g_1, g_2 \in \mathcal{G}_N$ either commute, that is, $[g_1, g_2] := g_1 g_2 - g_2 g_1 = 0$, or anti-commute, that is, $\{g_1, g_2\} := g_1 g_2 + g_2 g_1 = 0$.

The Hadamard gate, denoted by H, acts on a single qubit. It maps a computational basis state to a phase basis state and vice-versa. Its action in the computational basis is as follow:

$$H|0\rangle = |+\rangle, \qquad H|1\rangle = |-\rangle \tag{10}$$

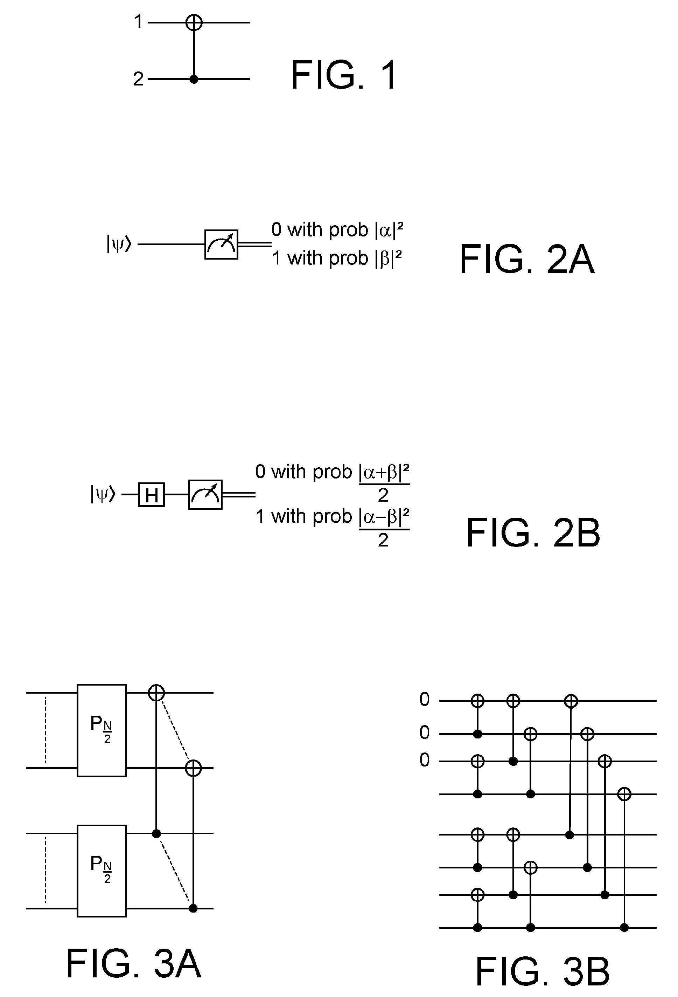

Fig. 1 represents a Controlled-NOT (CNOT) gate the $\text{CNOT}_{2\rightarrow1}$. The gate takes as input two qubits with control on the second qubit and target on the first qubit. Each horizontal wire carries a single qubit from left to right. In the computational basis, the action of the gate takes place at the target qubit while the control qubit is unaffected by this action. Precisely, the gate $\text{CNOT}_{2\rightarrow1}$ acts similarly to the classical reversible XOR gate, denoted $\text{XOR}_{2\rightarrow1}$, in the computational basis, that is:

$$\text{CNOT}_{2\rightarrow1}\left(|x\rangle \otimes |y\rangle\right) = |x \oplus y\rangle \otimes |y\rangle, \quad x,y \in \{0,1\} \tag{11}$$

where $x \otimes y$ denotes the XOR (sum modulo 2) of binary values $x$ and $y$.

The $\text{CNOT}_{2\rightarrow1}$ gate and the classical XOR gate are represented by the same circuit except to the fact that the CNOT gate acts on two qubits, while the XOR gate acts on two bits.

It is worth noting that $\text{CNOT}_{2\rightarrow1}$ acts as the $\text{XOR}_{1\rightarrow2}$ gate (with reversed control and target) in the phase basis. Precisely, let $|\bar{0}\rangle := |+\rangle$ and $|\bar{1}\rangle := |-\rangle$, then we have the following:

$$\text{CNOT}_{2\rightarrow1}\left(|\bar{x}\rangle \otimes |\bar{y}\rangle\right) = |\bar{x}\rangle \otimes |\overline{x \oplus y}\rangle, \quad x,y \in \{0,1\} \tag{12}$$

Figs. 2A and 2B represent quantum measurement circuits on a qubit in computational and phases bases. The single wire on the input carries a single qubit while the double wire on the output carries a single classical bit.

In general, a quantum measurement on a qubit is performed with respect to an orthogonal basis, and the measurement outcome gives classical information. After the measurement, the qubit collapses randomly into one of the basis states, depending on the measurement outcome.

In particular, Fig. 2A represents the measurement of the qubit $|\psi\rangle = \alpha|0\rangle + \beta|1\rangle$ in the computational basis. The measurement output is 0 with probability $|\alpha|^2$ and 1 with probability $|\beta|^2$. If the measurement outcome is 0, then the output state is $|0\rangle$ and if the measurement outcome is 1, then the output state is $|1\rangle$.

The computational basis measurement is also known as the Pauli $Z$ measurement as $|0\rangle$ and $|1\rangle$ are eigenstates of the Pauli gate $Z$.

Fig. 2B represents the measurement of the qubit $|\psi\rangle = \alpha|0\rangle + \beta|1\rangle$ in the phase basis $\{|+\rangle, |-\rangle\}$. The measurement circuit is equivalent to first applying the Hadamard gate on $|\psi\rangle$, and then measuing it in the computational basis.

The phase basis measurement is also known as the Pauli $X$ measurement as $|+\rangle$ and $|-\rangle$ are eigenstates of the Pauli gate $X$.

Although various technologies exist for implementing quantum computers, they all share the same shortcomings, namely that the qubits are affected by external noise and decoherence. Whereas bits in classical computers are materialized at the physical level by on/off states of transistor switches with high error margins, there is no such security for qubits. Indeed, the fragile superposition of states of a qubit may easily be disturbed by its environment and collapse, resulting in a loss of information. Quantum computers therefore fundamentally require error correction codes and fault tolerance at the physical level.

Quantum error correcting codes entangle several physical qubits, which act as a logical qubit. Entanglement between physical qubits is used to protect the logical information from error. More precisely, entanglement defines a correlation between physical qubits in terms of their Pauli operators, and an error happening on physical qubits changes the correlation. It is possible to detect this change in correlation by doing joint quantum measurements, in a way that the logical information is not collapsed. The classical information learned by doing this measurement is called a 'syndrome'. The extracted syndrome is given as an input to a classical decoder, which generates an estimate of the error that has happened.

There are different types of quantum error correcting codes such as stabilizer codes and Calderbank-Steane-Shor (CSS) codes.

A stabilizer code on $N$ physical qubits is defined using a subgroup $\mathcal{G}$ of the $N$-qubit Pauli group $\mathcal{G}_N$. The codespace corresponding to the stabilizer code is the subset of the $N$-qubit Hilbert space, stabilized by the subgroup $\mathcal{G}$. A Pauli operator $g \in \mathcal{G}_N$ stabilizes a quantum state $|\phi\rangle$, if it is an eigenstate of $g$ with the eigenvalue 1, that is:

$$g \, |\phi\rangle = \, |\phi\rangle \qquad\qquad (13)$$

A subset $C$ of quantum states is said to be stabilized by a subgroup $\mathcal{G} \subset \mathcal{G}_N$ if every element $g \in \mathcal{G}$ stabilizes every quantum state $|\phi\rangle \in C$.

Note that for C to be non-empty, it is sufficient to have $-I \notin \mathcal{G}$ and all the elements in $\mathcal{G}$ commute with each other, meaning that, for any two elements $g_1, g_2 \in \mathcal{G}$, we have:

$$[g_1, g_2] = 0 \qquad\qquad (14)$$

The subgroup $\mathcal{G}$ can be completely specified by a generating set $G = \{g_1, g_2, ..., g_N\}$. A generating set is independent if any $g_i \in G$ cannot be written as a product of elements from $\{g_1, g_2, ..., g_N\} \setminus \{g_i\}$. The size of an independent generating set determines the number of logical qubits encoded by the stabillizer code. Precisely, if the number of elements in an independent generating set is equal to $N - K$, then the stabilizer code encodes $K$ qubits. When $K = 0$, the code does not encode any quantum information, as it has only one fixed quantum state in its codespace, called a stabilizer state.

Stabilizer codes are suitable for detecting Pauli errors. Consider a code state $|\psi\rangle$, on which a random $N$-qubit Pauli error $E \in \mathcal{G}_N$ happens. Since any two elements of $\mathcal{G}_N$ either commute or anti-commute, then, for any $g_i \in G$, we have the following:

$$g_i E|\psi\rangle = (-1)^a \, E|\psi\rangle \qquad\qquad (15)$$

where $\alpha = 0$ if $g_i$ commutes with $E$, and $\alpha = 1$ if $g_i$ anti-commutes with E. Therefore, if $g_i$ anti-commutes with $E$, Eq. (15) implies that the error corrupted state $E|\psi\rangle$ is an eigenstate of $g_i$, with eigenvalue -1. This means that we can detect the error by doing the Pauli measurement corresponding to the generator $g_i$.

The syndrome measurement of stabilizer codes corresponds to measuring all the generators $g_1, g_2, ..., g_N$. Based on the extracted syndrome, an estimate $\hat{E}$ of $E$ is then generated using a classical decoder.

The CSS codes are an important subclass of stabilizer codes. A stabilizer code is a CSS code if there exists a generating set $G = G_x \cup G_z$ of the stabilizer group, such that any $g_x \in G_X$ can be written as a tensor product of $I$ and $X$, that is, $g_x = X^u := X^{u1} \otimes X^{u2} \otimes ... \otimes X^{uN}$, for some $\boldsymbol{u} = (u_1, u_2, \cdots, u_N) \in \{0, 1\}^N$, and similarly any $g_z \in G_Z$ can be written as a tensor product of $I$ and $Z$, that is, $g_z = Z^v := Z^{v1} \otimes Z^{v2} \otimes \cdots \otimes Z^{vN}$ for some $\boldsymbol{v} = (v_1, v_2, \cdots, v_N) \in \{0,1\}^N$. Since, $g_x$ and $g_z$ must commute with each other, this imposes the following constraint:

$$\boldsymbol{u} \cdot \boldsymbol{v} := \sum_i u_i v_i = 0 \ (\mathrm{mod}\ 2) \qquad\qquad (16)$$

The CSS code may be associated with two classical codes on $N$ bits, with parity check matrices $H_x$ and $H_z$, where $H_x$ is a binary matrix whose rows are vectors $\boldsymbol{u} \in \{0, 1\}^N$ such that $X^u \in G_X$, and $H_z$ is a binary matrix whose rows are vectors $\boldsymbol{v} \in \{0, 1\}^N$, such that $Z^v \in G_Z$. Then, Eq. (13) is equivalent to:

$$H_X H_Z^T = 0 \ (\mathrm{mod}\ 2) \qquad\qquad (17)$$

Similarly, CSS quantum polar codes are constructed on the basis of classical polar codes.

Figs. 3A and 3B represent the encoding of classical polar codes using reversible XOR gates.

The encoding of classical polar codes is done by applying the reversible XOR gate recursively on an $N$-bit input u $= (u_1, u_2, \cdots, u_N) \in \{0,1\}^N$, where $N = 2^n$, $n > 0$. For a set of positions $\mathcal{F} \subset \{1, \ldots, N\text{-}1\}$, the corresponding component $\boldsymbol{u}_{\mathcal{F}} \in \{0, 1\}^{|\mathcal{F}|}$ of the input vector u is frozen (i.e. fixed). We may take $\boldsymbol{u}_{\mathcal{F}}$ to be any vector in $\{0, 1\}^{|\mathcal{F}|}$, but it should be known to both the encoder and decoder. The set $\mathcal{F}$ is called the 'frozen set'. The remaining positions $\mathcal{I} := \{1, \ldots, N\text{-}1\} \setminus \mathcal{F}$ are used to encode bits. The set $\mathcal{I}$ is called the 'information set'.

In the following, we denote by $P(N, \mathcal{F}, \boldsymbol{u}_{\mathcal{F}})$, the classical polar code of codelength $N$, frozen positions $\mathcal{F}$, and frozen vector $\boldsymbol{u}_{\mathcal{F}} \in \{0, 1\}^{|\mathcal{F}|}$.

The action of the reversible XOR gate $\mathrm{XOR}_{2 \to 1}$ on $\boldsymbol{u} = (u_1, u_2) \in \{0, 1\}^2$ gives $\boldsymbol{u'} = (u_1 \oplus u_2, u_2)$. The vector $\boldsymbol{u'}$ can be expressed as $\boldsymbol{u'} = P_2 \boldsymbol{u}$, where $P_2$ is the following matrix:

$$P_2 = \begin{bmatrix} 1 & 1 \\ 0 & 1 \end{bmatrix} \qquad\qquad (18)$$

Classical polar transform, that is, the recursive application of $\mathrm{XOR}_{2 \to 1}$ on $N = 2^n$ qubits, is given by the matrix $P_N = P_2^{\otimes n}$. We note that the action of the opposite XOR, i.e., $\mathrm{XOR}_{1 \to 2}$ is described by $P_2^{\mathsf{T}}$, i.e. the transpose of $P_2$. Hence, the recursive application of $\mathrm{XOR}_{1 \to 2}$ is described by $P_N^{\mathsf{T}}$.

For any vector of information bits $\boldsymbol{u}_{\mathcal{I}} \in \{0, 1\}^{|u_{\mathcal{I}}|}$, $y = P_u(\boldsymbol{u}_{\mathcal{F}}, \boldsymbol{u}_{\mathcal{I}}) \in \{0,1\}^N$ is a codeword of the polar code $P(N, \mathcal{F}, \boldsymbol{u}_{\mathcal{F}})$. Let $P_N^{(j)}$ be the $j$th column of $P_N$, for $j \in \{1, \ldots, N\text{-}1\}$ and let $\boldsymbol{u}_{\mathcal{F}}$ be the all zero vector. Then, the classical polar code $P(N, \mathcal{F}, \boldsymbol{u}_{\mathcal{F}})$ is generated by the set $G = \{P_N^{(j)} \mid j \in \mathcal{I}\}$.

Classical polar codes have an efficient decoder known as 'successive cancellation' (SC) decoder. SC decoder takes as input the frozen vector $\boldsymbol{u}_{\mathcal{F}}$, and a noisy version of the codeword $\boldsymbol{y} \oplus \boldsymbol{e}$, where $\boldsymbol{y} = P_N(\boldsymbol{u}_{\mathcal{F}}, \boldsymbol{u}_{\mathcal{I}})$ is a codeword, and e $\in \{0, 1\}^N$ is a random error, and it outputs an estimate $\widehat{\boldsymbol{u}}_{\mathcal{I}}$ of $\boldsymbol{u}_{\mathcal{I}}$.

The polar transform $P_N$, for any $N = 2^n$, $n \geq 0$, relates to $P_{\frac{N}{2}}$, as depicted in Fig. 3A. Similarly, $P_{\frac{N}{2}}$ relates to $P_{\frac{N}{4}}$, and $P_{\frac{N}{4}}$ relates to $P_{\frac{N}{8}}$ and so on. Hence, doing this recursively, we can express $P_N$ only in terms of the XOR gate.

Fig. 3B represents the polar transform of a classical polar code of codelength $N = 2^3$ encoding 5 bits and where 3 bits are frozen. In this example, the frozen set is $\mathcal{F} = \{1,2,3\}$ and the frozen vector is $\boldsymbol{u}_{\mathcal{F}} = (0,0,0)$.

In what follows, we use the notation $|\overline{0}\rangle := |+\rangle$ and $|\overline{1}\rangle := |-\rangle$ to denote phase basis states. For $\boldsymbol{u} = (u_1, \ldots, u_N) \in \{0, 1\}^N$, we define $|\overline{\boldsymbol{u}}\rangle = |\overline{u_1}\rangle \otimes |\overline{u_2}\rangle \oplus \ldots \oplus |\overline{u_N}\rangle$. Moreover, we define $X^{\boldsymbol{u}} := X^{u_1} \otimes X^{u_2} \otimes \ldots \otimes X^{u_N}$, and similarly $Z^{\boldsymbol{u}} := Z^{u_1} \oplus Z^{u_2} \oplus \cdots \oplus Z^{u_N}$.

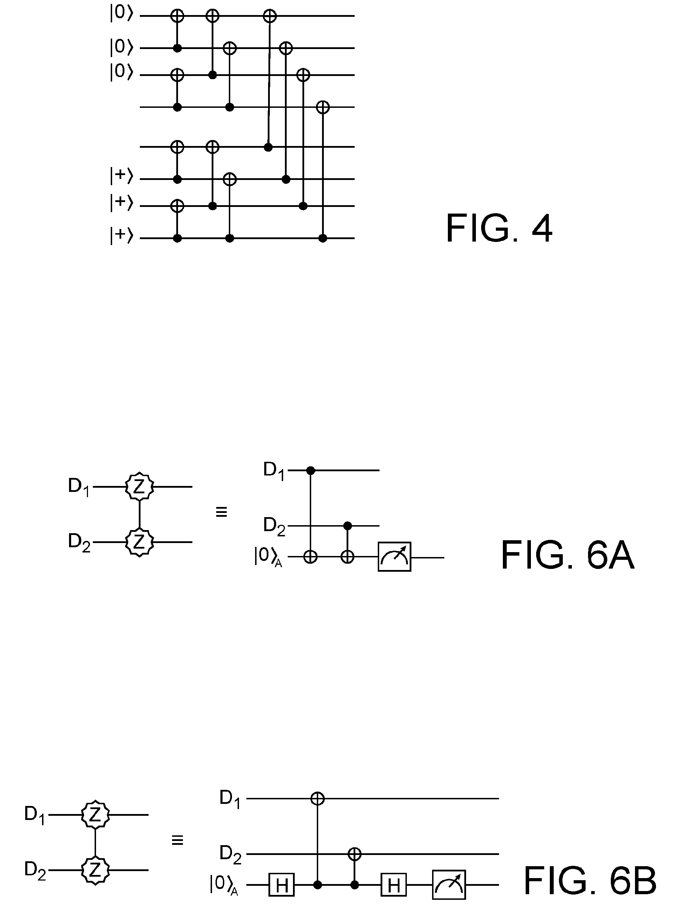

Fig. 4 represents the encoding of CSS quantum polar codes using the quantum CNOT gates.

The encoding of CSS quantum polar codes is done by applying the quantum CNOT gate recursively on an $N$ qubit quantum state $|\phi\rangle_{\mathcal{S}}$, where $\mathcal{S} := \{1, \ldots, N\}$. For a subset of positions $\mathcal{Z} \subset \mathcal{S}$, the input quantum state is frozen to a computational basis quantum state $|\boldsymbol{u}\rangle_{\mathcal{Z}}$, where $\boldsymbol{u} \in \{0, 1\}^{|\mathcal{Z}|}$, and for another subset $\mathcal{X} \subset \mathcal{S}$, it is frozen to a phase basis

state $|\overline{v}\rangle_X$, where $v \in \{0, 1\}^{|X|}$. For u and $v$, we may take any vectors in $\{0, 1\}^{|Z|}$ and $\{0, 1\}^{|X|}$, respectively, but they should be known to both the encoder and decoder.

The remaining subset $\mathcal{D} := \mathcal{S} \setminus (\mathcal{X} \cup \mathcal{Z})$ is used to encode a quantum state $|\psi\rangle_{\mathcal{D}}$. Hence, the uncoded quantum state $|\phi\rangle_S$ can be written as:

$$|\phi\rangle_S = |\psi\rangle_{\mathcal{D}} \otimes |\boldsymbol{u}\rangle_Z \otimes |\overline{\boldsymbol{v}}\rangle_X \tag{19}$$

where $|\psi\rangle_{\mathcal{D}}$ is an arbitrary quantum state that we want to encode. Then, the encoded quantum state is given by $Q_N |\phi\rangle_S$, where $Q_N$ denotes the quantum polar transform on $N$ qubits, that is, the quantum operator on $N$ qubits defined by the recursive application of the CNOT gate.

A quantum polar code on $N$ qubits, with frozen indices $\mathcal{Z}$ and $\mathcal{X}$ corresponding to the computational and phase bases, respectively, and with frozen quantum states $|\boldsymbol{u}\rangle_Z$ and $|\overline{\boldsymbol{v}}\rangle_X$ is denoted by $Q(N, \mathcal{Z}, \mathcal{Z}, |\boldsymbol{u}\rangle_Z, |\overline{\boldsymbol{v}}\rangle_X)$. In particular, the circuit represented in Fig. 4 concerns a quantum polar code $Q(N, \mathcal{Z}, X, |\boldsymbol{u}\rangle_Z, |\overline{\boldsymbol{v}}\rangle_X)$, with $N = 2^3$, $\mathcal{Z} = \{1,2,3\}$, $\mathcal{X} = \{6,7,8\}$, $|\boldsymbol{u}\rangle_Z = |0,0,0\rangle$, and $|\overline{\boldsymbol{v}}\rangle_X = |\overline{0,0,0}\rangle$.

It is known that $\text{CNOT}_{2\to1}$ acts as the reversible XOR gate $\text{XOR}_{2\to1}$ in the computational basis, while it acts as $\text{XOR}_{1\to2}$ in the phase basis. Hence, the quantum polar transform $Q_N$ acts as classical polar transform in the computational basis, while it acts as the opposite polar transform in the phase basis. The polar transform and the opposite polar transform are described by the matrices $P_N$ and $P_N^{\mathsf{T}}$, respectively. Hence, for computational and phase basis states corresponding to u E $\{0,1\}^N$, the encoded quantum state $Q_N |\boldsymbol{u}\rangle_S$ can be expressed as:

$$Q_N |\boldsymbol{u}\rangle_S = |P_N \boldsymbol{u}\rangle_S \tag{20}$$

$$Q_N |\overline{\boldsymbol{u}}\rangle_S = \left|\overline{P_N^{\mathsf{T}} \boldsymbol{u}}\right\rangle_S \tag{21}$$

To define the $X$ and Z type stabilizer generators of the polar code $Q(N, \mathcal{Z}, X, |\boldsymbol{u}\rangle_Z, |\overline{\boldsymbol{v}}\rangle_X)$, let $\boldsymbol{e}_N^i \in \{0, 1\}^N$ be the binary vector, with 0 everywhere except 1 at the ith position. Hence, the uncoded quantum state $|\phi\rangle_S$ in Eq. (19) is stabilized by the following Pauli operators:

$$(-1)^{u_i} Z^{\boldsymbol{e}_N^i}, \qquad \forall i \in \mathcal{Z} \tag{22}$$

$$(-1)^{v_i} X^{\boldsymbol{e}_N^i}, \qquad \forall i \in \mathcal{X} \tag{23}$$

Then, it follows that the encoded quantum state $Q_N |\phi\rangle_S$ is stabilized by the following operators:

$$(-1)^{u_i} Q_N Z^{\boldsymbol{e}_N^i} Q_N, \qquad \forall i \in \mathcal{Z} \tag{24}$$

$$(-1)^{v_i} Q_N X^{\boldsymbol{e}_N^i} Q_N, \qquad \forall i \in \mathcal{X} \tag{25}$$

The above operators are generators of the stabilizer group of the code $Q(N, \mathcal{Z}, X, |\boldsymbol{u}\rangle_Z, |\overline{\boldsymbol{v}}\rangle_X)$.

The sandwiching actions of the CNOT gate $CNOT_{2\rightarrow1}$ on two qubit Pauli $Z$ and $X$ type operators are expressed as follows:

$$CNOT_{2\rightarrow1}\, Z^{\boldsymbol{u}}\, CNOT_{2\rightarrow1} = Z^{P_2^{\mathsf{T}}\boldsymbol{u}}, \qquad \boldsymbol{u} \in \{0,1\}^2 \qquad (26)$$

$$CNOT_{2\rightarrow1}\, X^{\boldsymbol{u}}\, CNOT_{2\rightarrow1} = X^{P_2\boldsymbol{u}}, \qquad \boldsymbol{u} \in \{0,1\}^2 \qquad (27)$$

Since $Q_N$ is simply the recursion of $CNOT_{2\rightarrow1}$, the sandwiching action of $Q_N$ is described by classical polar transforms $P_N^{\mathsf{T}}$ and $P_N$, respectively, on $Z$ and $X$ type operators. This means that the $X$ and $Z$ type generators of $Q(N, \mathcal{Z}, X, |\boldsymbol{u}\rangle_Z, |\overline{\boldsymbol{v}}\rangle_X)$ in Eqs. (24) and (25) can be written as follows:

$$(-1)^{u_i}\, Z^{P_N^{\mathsf{T}}e_N^i}, \qquad i \in \mathcal{Z} \qquad (28)$$

$$(-1)^{v_i}\, X^{P_N e_N^i}, \qquad i \in \mathcal{X} \qquad (29)$$

Therefore, the $Z$ type stabilizers of the quantum polar code $Q(N, \mathcal{Z}, X, |\boldsymbol{u}\rangle_Z, |\overline{\boldsymbol{v}}\rangle_X)$ are given by the columns of $P_N^T$ corresponding to the set $Z$, and the $X$ type stabilizers are given by the columns of $P_N$, corresponding to the set $\mathcal{X}$.

Note from Eqs. (28) and (29) that the vectors $\boldsymbol{u}, \boldsymbol{v}$ cause only a sign factor in the stabilizer generators. Hence, two quantum polar codes that are defined by the same frozen set $\mathcal{Z}$ (respectively, $X$), but by different frozen states $|\boldsymbol{u}\rangle_Z$ (respectively, $|\overline{\boldsymbol{v}}\rangle_X$) have the same $Z$ (respectively, $X$) type generating set, up to a sign factor. For this reason, two stabilizer codes having the same sets $\mathcal{Z}, X$ are said to be 'equivalent stabilizer codes'.

A quantum polar code $Q(N, \mathcal{Z}, \mathcal{X}, |\boldsymbol{u}\rangle_Z, |\overline{\boldsymbol{v}}\rangle_X)$ as defined above can be used to encode information. However, the preparation of a polar code state according to the implementation of the quantum polar transform as described in relation to Fig. 4 is not fault tolerant, under the effect of noise. In fact, an error caused by a noise on a qubit may propagate to many qubits through the CNOT gates, applied during the implementation. Therefore, the implementation of the quantum polar transform according to the prior art cannot be used for fault tolerant quantum computations.

ZUNAIRABABAR ET AL: "Polar Codes and Their Quantum-Domain Counterparts", ARXIV.ORG, discusses quantum polar codes, which are encoded by recursively applying a quantum CNOT gate to a quantum state.

An object of the present invention is to remedy the aforementioned drawbacks by proposing a circuit for preparing quantum polar code states in a simple manner that can be efficiently used for fault tolerant quantum computations.

**BRIEF DESCRIPTION OF THE INVENTION**

The present invention concerns a method of preparation of quantum polar code states for fault tolerant quantum computation, comprising the following steps:

- prepare an initial quantum system $\mathcal{S} = \{1, ..., N\}$, of $N = 2^n$ single-qubit states associated to an initial quantum base,

- prepare a desired quantum polar code state $|q_{2^n}\rangle_S$ of codelength $N = 2^n$, referenced by predetermined first and second sets of frozen indices $Z = \{1, ... , i\}$, $\mathcal{X} = \{i + 1, ... , N\}$ with respect to first and second quantum bases respectively, said quantum polar code state $|q_{2^n}\rangle_S$ being prepared by recursively using two qubit Pauli measurement $P \otimes P$ circuits wherein, at each recursive level $k$, where $k = 1$ *to n*, prepare a set of $2^n/2^k$ quantum polar code states

$$\left\{ \left| q_{2^k} \right\rangle_{\mathcal{S}_{j(k)}}, j(k) = 1 \ to \ 2^n/2^k \right\}$$

of codelengths $2^k$, referenced by corresponding sets $\mathcal{S}_{j(k)}$ of indices comprising first and second sets of frozen indices $\mathcal{Z}_{j(k)} = \{1_j, ..., i_{j(k)}\}$ and $\mathcal{X}_{j(k)} = \left\{(i+1)_{j(k)}, ..., 2^k_{j(k)}\right\}$, each quantum polar code state $\left| q_{2^k} \right\rangle_{\mathcal{S}_{j(k)}}$ being prepared by applying two qubit Pauli measurement $P \otimes P$ circuits on two equivalent polar code states $\left| q^1_{2^{k-1}} \right\rangle_{\mathcal{S}^1_{j(k-1)}}$ and $\left| q^2_{2^{k-1}} \right\rangle_{\mathcal{S}^2_{j(k-1)}}$ belonging to the output of the antecedent recursive level $k$ - 1 and referenced by two corresponding sets of indices $\mathcal{S}^1_{j(k-1)}$ and $\mathcal{S}^2_{j(k-1)}$ each of which comprising first and second sets of frozen indices $\mathcal{Z}_{j(k-1)}$ and $\mathcal{X}_{j(k-1)}$ corresponding to first and second quantum bases respectively, the antecedent of the first recursive level $k$ = 1 being said initial quantum system of single qubit states.

The method according to the present invention enables to prepare in a simple and robust manner, polar code states that can be used in a noiseless scenario as well as in a noisy scenario. According to the present method of preparation of quantum polar code states, any eventual error on a quantum state at any recursive level do not propagate to an increased number of qubits.

Various preferred embodiments of the present invention are defined in the appended claims. In particular, the fault tolerance under the effect of noise is achieved using two different estimation techniques. The first one is based on an error detection technique and the second is based on an error correction technique. The fault tolerant quantum polar code states are important to quantum computation.

## BRIEF DESCRIPTION OF THE DRAWINGS

The present invention will be better understood from the description of the following embodiments, by way of illustration and in no way limitative thereto:

Fig. 1, already described, represents a Controlled-NOT gate the $CNOT_{2 \to 1}$ known from the prior art;

Figs. 2A and 2B, already described, represent quantum measurement circuits on a qubit in computational and phases bases, known from the prior art;

Figs. 3A and 3B, already described, represent the encoding of classical polar codes using reversible XOR gates, known from the prior art;

Fig. 4, already described, represents the encoding of CSS quantum polar codes using the quantum CNOT gates, known from the prior art;

Fig. 5 schematically represents a quantum computing system for the preparation of quantum polar code states, according to a preferred embodiment of the present invention;

Figs. 6A and 6B schematically represent Pauli $Z \otimes Z$ and $X \otimes X$ measurement circuits on two qubits $D_1$ and $D_2$, used in Fig. 5;

Fig. 7 schematically represents a method of preparation of quantum polar code states according to a preferred embodiment of the present invention;

Figs. 8A and 8B, schematically represent the preparation of polar code states of length $N$, given two equivalent polar code states of length $N/2$, according to an embodiment of the present invention;

Figs. 9A, 9B, 9C and 9D schematically represent different examples of fault tolerant preparation of quantum polar code states, according to an embodiment of the present invention; and

Fig. 10 schematically represents a computing system according to an embodiment of the present invention.

## DETAILED DISCLOSURE OF PARTICULAR EMBODIMENTS

The present invention proposes a measurement-based preparation of fault tolerant quantum polar code states, using only two qubit quantum measurements.

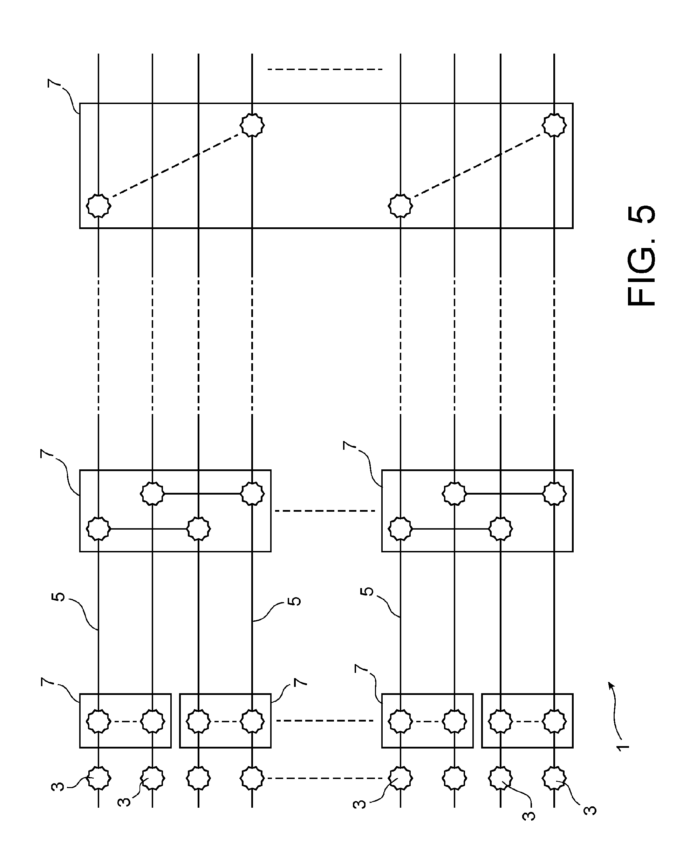

Fig. 5 schematically represents a quantum computing system for the preparation of quantum polar code states to be used for fault tolerant computation, according to a preferred embodiment of the present invention.

The quantum computing system 1 comprises different types of quantum gates 3 that are interconnected by wires 5 to form quantum circuits 7 and in particular, Pauli measurement circuits. The wires 5 carry qubits around the circuits, while the quantum gates 3 execute some operations on the qubits to make quantum computations.

This quantum computing system uses single Pauli measurement circuits for example of the $Z$ and $X$ types (see Figs. 2A and 2B) as well as two qubit Pauli $P \otimes P$ measurement circuits for example of the $Z \otimes Z$ type or $X \otimes X$ type (see Figs. 6A and 6B).

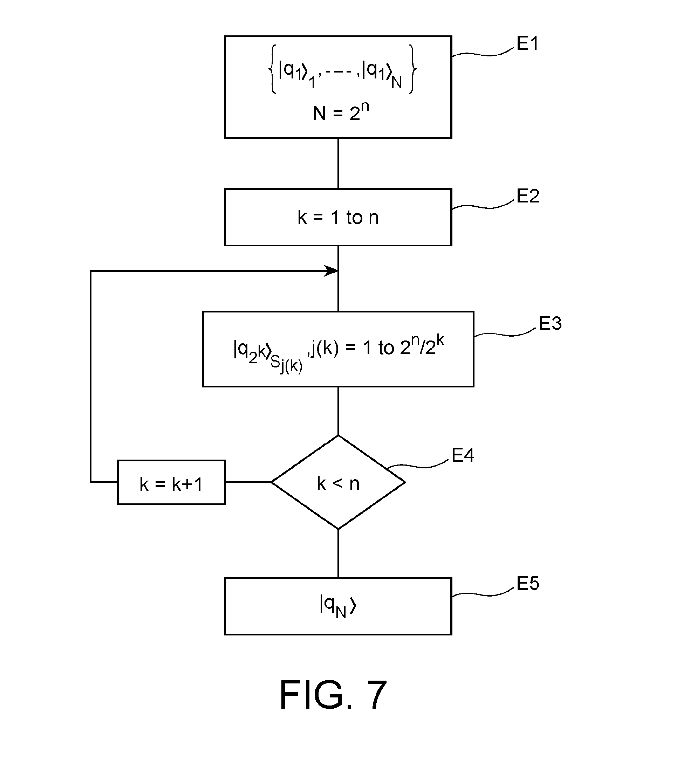

As explained below in relation to Fig. 7, single-qubit measurements are used at an initialization step $k = 0$, as a way to prepare an initial quantum system of $N = 2^n$ single-qubit states associated to an initial quantum base. Two-qubit measurements are used at each subsequent step $k = 1$ *to* $n$, as a way to prepare a set of quantum polar code states, of codelength $2^k$.

Figs. 6A and 6B schematically represent Pauli $Z \otimes Z$ and $X \otimes X$ measurement circuits on two qubits $D_1$ and $D_2$.

In Fig. 6A the right-hand side is a quantum circuit used to implement the Pauli $Z \otimes Z$ measurement on two qubits $D_1$ and $D_2$ and the left-hand side is simply a shorthand notation for the circuit on the right-hand side.

In practice, Pauli $Z \otimes Z$ measurement may be implemented by the circuit on the right hand side, using an ancilla qubit $A$. Here, qubits $D_1$ and $D_2$ are first entangled with A, by applying the CNOT gates $\text{CNOT}_{D_1 \to A}$ and $\text{CNOT}_{D_2 \to A}$. Then, a Pauli-$Z$ measurement is done on $A$. The resulting procedure is a Pauli $Z \oplus Z$ measurement on qubits $D_1$ and $D_2$.

In Fig. 6B the left-hand side is a shorthand notation for the circuit on the right-hand side which is used to implement the Pauli $X \otimes X$ measurement on two qubits $D_1$ and $D_2$.

In practice, Pauli $X \otimes X$ measurement may be implemented by the circuit on the right hand side, using an ancilla qubit $A$. At first, a Hadamard gate is applied on $A$. Then it is entangled with qubits $D_1$ and $D_2$, by applying the CNOT gates $\text{CNOT}_{A \to D_1}$, and $\text{CNOT}_{A \to D_2}$. Then another Hadamard gate is applied back on $A$, which is then followed by a Pauli-Z measurement. The resulting procedure is a Pauli $X \oplus X$ measurement on qubits $D_1$ and $D_2$.

Various technologies exist for materializing or implementing qubits, quantum gates, quantum circuits and quantum computers. One technology is based on the energy levels of ions trapped in an electric or magnetic field at a temperature near absolute zero using also laser pulses, optical pumping, etc. Another technology may use nuclear magnetic resonance where transformations may be constructed from magnetic field pulses applied to spins in a strong magnetic field, etc. Other technologies use physical systems based on small semiconductors called quantum dots bounding the spin of electrons. Other systems may take advantage of electrons or ions trapped in synthetic diamonds.

Different examples of physical systems materializing qubits, quantum gates and quantum circuits can be found in the reference book entitled "Quantum computation and quantum information" authored by M.A. Nielsen and I.L. Chuang, Cambridge University Press, 2016.

The quantum circuits according to the present invention, comprise different sets of Pauli measurement circuits configured to recursively prepare a fault tolerant quantum polar code $|q_{2^n}\rangle_{\mathcal{S}}$ of codelength $N = 2^n$, where $\mathcal{S} = \{1, \dots, N\}$ denotes a system of $N$ qubits. These sets are

organized in a sequential order of different levels adapted to recursively prepare a quantum polar code $|q_{2^n}\rangle_{\mathcal{S}}$ of codelength $N = 2^n$.

At the first level $k = 0$, a set of single qubit Pauli measurement circuits 3 are used to prepare an initial quantum system of $N = 2^n$ single-qubit states, where each qubit is prepared in an initial quantum base. For example, each qubit is prepared as a $|0\rangle$ in a Z-quantum-basis.

At each subsequent level $k$, a set of two qubit Pauli measurement $P \otimes P$ circuits are used to prepare a set of quantum polar code states, of codelength $2^k$, $k = 1$ *to* $n$. Lastly, at the final level, the quantum polar code $|q_{2^n}\rangle_{\mathcal{S}}$ of codelength $N = 2^n$ is prepared. The details of this preparation is explained in relation to the method of Fig. 7.

Fig. 7 schematically represents a method of preparation of quantum polar code states according to a preferred embodiment of the present invention.

Step E1 concerns the preparation of an initial quantum system $\mathcal{S}$ of $N = 2^n$ single-qubit states $\{|q_1\rangle_1, \dots, |q_1\rangle_N\}$ associated to an initial quantum base. The initial quantum base may for example, be a computational base $|u\rangle$ where $u \in \{0,1\}^N$ or a phase base $|\overline{v}\rangle$ where $v \in \{0,1\}^N$

The initial quantum system of $N$ single-qubit states may be prepared by applying a single qubit Pauli Z measurement circuit on each qubit of an $N$ qubit quantum state.

Steps E2-E5 describe a recursive preparation of a desired quantum polar code $|q_{2^n}\rangle_{\mathcal{S}}$ by using two qubit Pauli measurement $P \otimes P$ circuits. The quantum polar code $|q_{2^n}\rangle_{\mathcal{S}}$ is referenced by predetermined first and second sets of frozen indices $Z$ and $X$ with respect to computational and phase bases, with corresponding frozen values $|u\rangle_Z$ and $|\overline{v}\rangle_X$.

As an embodiment of the present invention, CSS polar codes $Q(N, \mathcal{Z}, \mathcal{X}, |u\rangle_Z, |\overline{v}\rangle_X)$ that encodes only one information qubit, that is, $|\mathcal{X}| + |\mathcal{Z}| = N - 1$, are considered. Such a code is constructed as follows. An index $i \in \mathcal{S} := \{1, ... , N\}$ is selected to place the information qubit. All the indices before it belong to the frozen set $\mathcal{Z}$, that is, $\mathcal{Z} = \{1, ... , i - 1\}$, and all the indices after it belong to the frozen set $\mathcal{X}$, that is, $\mathcal{X} := \{i + 1, ... , N\}$.

The present invention is mainly interested in preparing a logical code state, and therefore, the information qubit corresponding to the selected index $i \in \mathcal{S}$ may be fixed in either one of the bases. The present invention does not depend on which basis the information qubit is fixed. For example, it may be chosen to fix the information index $i \in \mathcal{S}$ in the computational basis, i.e., the information qubit may be either $|0\rangle$ or $|1\rangle$. In this case, it may be assumed that $i \in \mathcal{Z}$, meaning that, $|\mathcal{X}| + |\mathcal{Z}| = N$. Thus, according to this example, the indices in the set $Z = \{1, ..., i - 1, i\}$ are frozen in some computational basis state $|\boldsymbol{u}\rangle_Z$, $\boldsymbol{u} \in \{0,1\}^i$, and the indices $\mathcal{X} := \{i + 1, ... , N\}$ are frozen in some phase basis state $|\overline{\boldsymbol{v}}\rangle_X$, $\boldsymbol{v} \in \{0, 1\}^{N-i}$. In other words, the desired quantum polar code $|q_N\rangle_S$ to be prepared may be defined as follows:

$$|q_N\rangle_S = |q_{2^n}\rangle_S := Q_N |\boldsymbol{u}, \overline{\boldsymbol{v}}\rangle_S = Q_N(|\boldsymbol{u}\rangle_Z \otimes |\overline{\boldsymbol{v}}\rangle_X) \qquad (30)$$

where $\boldsymbol{u} \in \{0,1\}^i$ and $\boldsymbol{v} \in \{0,1\}^{N-i}$ are known.

It is to be noted that according to Eqs. (28) and (29) described in the background section, the quantum state $|q_N\rangle_S$ given in Eq. (30), is a stabilizer state, whose $Z$ and $X$ type stabilizer groups are given by:

$$\mathcal{G}_Z := \left\{ (-1)^{\boldsymbol{z} \cdot \boldsymbol{u}} Z^{P_N^{\mathrm{T}}(\boldsymbol{z},\boldsymbol{0})} \mid \boldsymbol{z} \in \{0,1\}^i \right\} \qquad (31)$$

$$\mathcal{G}_X := \left\{ (-1)^{\boldsymbol{x} \cdot \boldsymbol{v}} X^{P_N(\boldsymbol{0},\boldsymbol{x})} \mid \boldsymbol{x} \in \{0,1\}^{N-i} \right\} \qquad (32)$$

The above Eqs. (31) and (32) imply that any two polar code states, $|q_N^1\rangle_S$ and $|q_N^2\rangle_S$ defined by the same frozen sets $\mathcal{Z}$, $\mathcal{X} \subset \mathcal{S} = \{1, ...,N\}$, have the same stabilizer groups $\mathcal{G}_Z$ and $\mathcal{G}_X$, modulo a sign factor even though their corresponding states $(|\boldsymbol{u_1}\rangle_Z, |\overline{\boldsymbol{v_1}}\rangle_X)$ and $(|\boldsymbol{u_2}\rangle_Z, |\overline{\boldsymbol{v_2}}\rangle_X)$ may be different. Hence, $|q_N^1\rangle_S$ and $|q_N^2\rangle_S$ are equivalent as stabilizer states.

Step E2 is a loop counter indexed by an integer $k$, that controls the recursive levels of a loop from $k = 1$ to $k = n$. The output of step E1, that is, the initial quantum system of single-qubit states $\{|q_1\rangle_1, ..., |q_1\rangle_N\}$ may be considered as a preliminary level $k = 0$. At each recursive level $k$, a set of $2^n/2^k$ equivalent quantum polar code states

$$\left\{ |q_{2^k}\rangle_{S_{j(k)}}, \; j(k) = 1 \; to \; 2^n/2^k \right\}$$

of codelengths $K = 2^k$ are prepared.

In particular, step E3 concerns the preparation at the recursive level $k$, of a set of $N/K = 2^n/2^k$ quantum polar code states

$$\left\{ |q_K\rangle_{S_{j(k)}}, j(k) = 1 \; to \; N/K \right\}$$

of codelengths $K = 2^k$. This set of $N/K$ quantum polar code states is referenced by corresponding sets $\mathcal{S}_{j(k)}$ of indices comprising first and second sets of frozen indices $\mathcal{Z}_{j(k)} = \{1_{j(k)}, ..., i_{j(k)}\}$ and $\mathcal{X}_{j(k)} = \left\{(i + 1)_{j(k)}, ..., 2_{j(k)}^k\right\}$.

The indices $i_{j(k)}$ are specified for $k = 1$ *to n,* as follows:

For the last recursion level, $k = n$, the corresponding index $i_{j(n)} = i$, where $i \in \mathcal{S} = \{1, \ldots , N\}$ is the selected information index used to encode quantum information, hence $\mathcal{Z}_{j(n)} = \mathcal{Z}$ and $X_{j(n)} = X$ from Eq. (30).

For $k < n$, the value of $i_{j(k)} \in \{1, \ldots , K = 2^k\}$ is determined from that of $i_{j(k+1)} \in \{1, \ldots, 2K = 2^{k+1}\}$, according to the following rule:

$$\begin{cases} i_{j(k)} = i_{j(k+1)} - K, & \text{if } i_{j(k+1)} > K \\ i_{j(k)} = i_{j(k+1)}, & \text{otherwise} \end{cases} \qquad (33)$$

Hence, $\mathcal{Z}_{j(k)} = \{1_{j(k)}, \ldots, i_{j(k)}\}$ is the set of the first $i_{j(k)}$ indices of the set $\mathcal{S}_{j(k)}$, while $X_{j(k)} = \{(i+1)_{j(k)}, \ldots, 2^k_{j(k)}\}$ is the set of the last $2^k - i_{j(k)}$ indices of the set $\mathcal{S}_{j(k)}$.

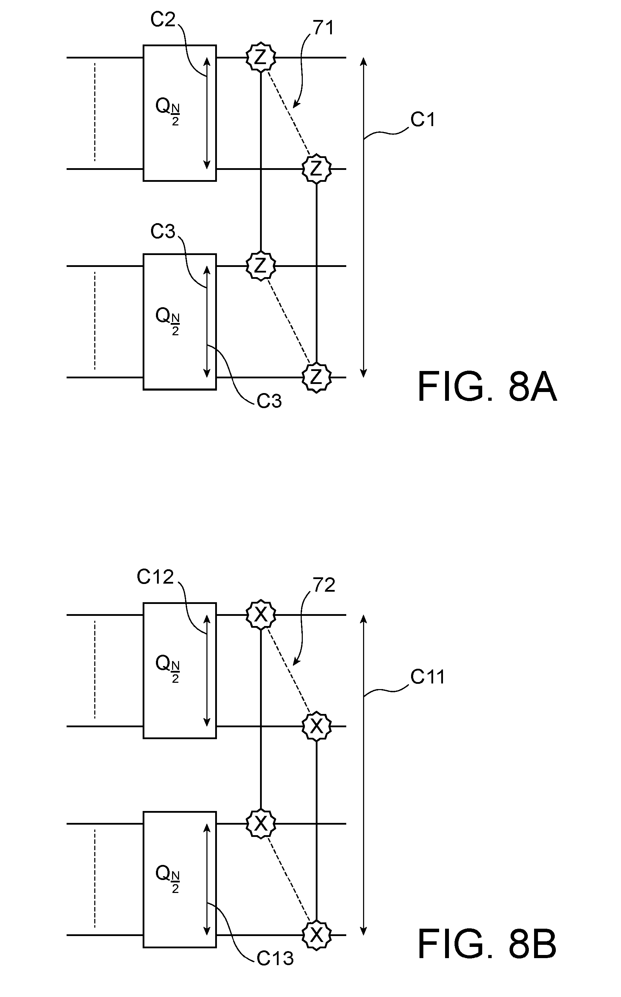

At the recursive level $k$, each quantum polar code state $|q_K\rangle_{\mathcal{S}_{j(k)}}$ (i.e. $|q_{2^k}\rangle_{\mathcal{S}_{j(k)}}$) is prepared by applying two qubit Pauli measurement P $\otimes$ P circuits on two equivalent polar code states $|q^1_{K/2}\rangle_{\mathcal{S}^1_{j(k-1)}}$ and $|q^2_{K/2}\rangle_{\mathcal{S}^2_{j(k-1)}}$ (i.e., $|q^1_{2^{k-1}}\rangle_{\mathcal{S}^1_{j(k-1)}}$ and $|q^2_{2^{k-1}}\rangle_{\mathcal{S}^2_{j(k-1)}}$ belonging to the output of the antecedent recursive level k - 1 and referenced by two corresponding sets of indices $\mathcal{S}^1_{j(k-1)}$ and $\mathcal{S}^2_{j(k-1)}$. Each set of indices comprises first and second sets of frozen indices $\mathcal{Z}_{j(k-1)}$ and $X_{j(k-1)}$ corresponding to the first and second quantum bases respectively, which for example, are the computational and phase bases states respectively. The type of the two-qubit Pauli measurement $P \otimes P$ circuits applied on the two equivalent polar code states $|q^1_{K/2}\rangle_{\mathcal{S}^1_{j(k-1)}}$ and $|q^2_{K/2}\rangle_{\mathcal{S}^2_{j(k-1)}}$ depends on the last index of the first set of frozen indices $\mathcal{Z}_{j(k)}$, as described below in relation to Figs. 8A and 8B.

Step E4 is a test, such that as long as $k < n$, the loop counter is incremented $k = k + 1$ before looping back to step E3. Otherwise, i.e., when $k = n$, we go to step E5.

At step E5, we have the desired quantum polar code $|q_{2^n}\rangle_{\mathcal{S}}$ of codelength $N = 2^n$.

The above method shows how to prepare polar code states of length $K$, given two equivalent polar code states of length $K/2$, and so on. For $K = 1$, the method is initialized by for example, preparing all the qubits in the computational basis, which can be done for instance by performing single qubit Pauli-$Z$ measurements. Hence, applied recursively, the method is adapted to prepare polar code states of any length $K$.

Figs. 8A and 8B, schematically represent the preparation of polar code states of length $N$, given two equivalent polar code states of length $N/2$, according to an embodiment of the present invention.

In fact, the represented construction applies to any polar code of length $K = 2^k$, $k = 1$ *to n,* given two equivalent polar code states of length $K/2$. Furthermore, for any given $K = 2^k$, $k > 0$, two cases are to be considered, according to whether $i_{j(k)} > \frac{K}{2}$ or $i_{j(k)} \leq \frac{K}{2}$, represented in Figs. 8A and 8B respectively.

For simplicity of notation, we shall consider hereafter, the preparation of the polar code state of length $N$, given the output at the recursive level $n$ - 1, of two equivalent polar code

states of length $N/2$. Hence, since $i_{j(n)} = i$, the two cases to be distinguished are $i > N/2$ and $i \leq N/2$. as represented in Figs. 8A and 8B respectively.

In particular, the example in Fig. 8A schematically represents the preparation of polar code state C1 of length $N$ using Pauli $Z \oplus Z$ measurement circuits 71, given two equivalent polar code states C2, C3 of length $N/2$, when i > $N/2$. The shorthand notation from Fig. 6A is used to represent Pauli $Z \otimes Z$ measurement circuits.

Let

$$i' := i - \frac{N}{2},$$

, and $\mathcal{Z}' := \{1, ..., i'\}$, and $X' := \{i' + 1, ..., N/2\}$. Assume that the following two equivalent polar code states of length N/2 are already determined:

$$\left|q_{N/2}^1\right\rangle_{\mathcal{S}_1} := Q_{N/2}|u_1, \overline{v}_1\rangle_{\mathcal{S}_1} \tag{34}$$

$$\left|q_{N/2}^2\right\rangle_{\mathcal{S}_2} := Q_{N/2}|u_2, \overline{v}_2\rangle_{\mathcal{S}_2} \tag{35}$$

where binary vectors $u_1, u_2 \in \{0, 1\}^{i'}$ and binary vectors $v_1, v_2 \in \{0, 1\}^{\frac{N}{2} - i'}$ are known.

The method according to the invention corresponds to performing qubit wise Pauli $Z \oplus Z$ measurements on the corresponding qubits in systems $\mathcal{S}_1$ and $\mathcal{S}_2$. The measurement outcome m is as follows:

$$m = P_{N/2}(u', x) \in \{0,1\}^{N/2} \tag{36}$$

where binary vector $u' = u_1 \oplus u_2 \in \{0, 1\}^{i'}$, and for some random binary vector $x \in \{0,1\}^{\frac{N}{2} - i'}$.

After the measurements, we are left with the following polar code state of length $N$ on the joint system $\mathcal{S}_1\mathcal{S}_2$:

$$|q_N\rangle_{\mathcal{S}_1\mathcal{S}_2} = Q_N|(u', x, u_2), \overline{v}'\rangle_{\mathcal{S}_1\mathcal{S}_2} \tag{37}$$

where binary vector $v' = v_1 \oplus v_2$.

To prove that the polar code state $|q_N\rangle$ as expressed in Eq. (37) is obtained out of the Pauli $Z \oplus Z$ measurements on polar code states $\left|q_{N/2}^1\right\rangle_{\mathcal{S}_1}$ and $\left|q_{N/2}^2\right\rangle_{\mathcal{S}_2}$, we express these latter polar code states in the computational basis, as follows:

$$\left|q_{N/2}^1\right\rangle_{\mathcal{S}_1} = Q_{\frac{N}{2}}|(u_1, \overline{v_1})\rangle_{\mathcal{S}_1} \tag{38}$$

$$= \sum_{x_1 \in \{0,1\}^{\frac{N}{2} - i'}} (-1)^{v_1 \cdot x_1} Q_{\frac{N}{2}}|(u_1, x_1)\rangle_{\mathcal{S}_1}$$

$$= \sum_{x_1 \in \{0,1\}^{\frac{N}{2} - i'}} (-1)^{v_1 \cdot x_1} \left|P_{N/2}(u_1, x_1)\right\rangle_{\mathcal{S}_1},$$

where the normalization factors are ignored and where the third equality follows from Eq. (20).

On the other hand, the polar code state $\left|q_{N/2}^2\right\rangle_{\mathcal{S}_2}$ can also be expressed in the computational basis similarly to Eq. (38).

As described in relation to Fig.6A (where $\mathcal{S}_1$ and $\mathcal{S}_2$ are denoted as $D_1$ and $D_2$), the qubit wise Pauli $Z \otimes Z$ measurement is done according to the following two steps:

At the first step, an N/2 qubit ancilla state $|0\rangle_{\mathcal{A}} := |0\rangle \otimes ... \otimes |0\rangle$ is defined and then qubit wise CNOT gates $CX_{\mathcal{S}_1 \to \mathcal{A}}$ and $CX_{\mathcal{S}_2 \to \mathcal{A}}$ are performed. This gives the following joint quantum state on $\mathcal{S}_1\mathcal{S}_2$ and $\mathcal{A}$:

$$|\eta\rangle_{s_1 s_2 \mathcal{A}} \tag{39}$$

$$:= \sum_{x_1, x_2 \in \{0,1\}^{\frac{N}{2}-i'}} (-1)^{v_1 \cdot x_1 \oplus v_2 \cdot x_2} \left|P_{\frac{N}{2}}(u_1, x_1)\right\rangle_{S_1} \left|P_{\frac{N}{2}}(u_2, x_2)\right\rangle_{S_2} \left|P_{\frac{N}{2}}(u_1 \right.$$

$$\oplus u_2, x_1 \oplus x_2)\Big\rangle_{\mathcal{A}}$$

Then, at the second step, single qubit Pauli-$Z$ measurement is done on each qubit in the ancilla system $A$. The measurement outcome gives $m = P_{N/2}(u', x)$, where $u' = u_1 \oplus u_2 \in \{0, 1\}^{i'}$, and for some random $x \in \{0,1\}^{\frac{N}{2}-i'}$. The joint state of systems $S_1$ and $S_2$ after the measurements is as follows:

$$|\eta'\rangle_{s_1 s_2} \tag{40}$$

$$= \sum_{\substack{x_1, x_2 \in \{0,1\}^{\frac{N}{2}-i'} \\ x_1 \oplus x_2 = x}} (-1)^{v_1 \cdot x_1 \oplus v_2 \cdot x_2} \left|P_{\frac{N}{2}}(u_1, x_1)\right\rangle_{S_1} \left|P_{\frac{N}{2}}(u_2, x_2)\right\rangle_{S_2}$$

The above quantum state $|\eta'\rangle_{s_1 s_2}$ corresponds to the polar code state $|q_N\rangle$ in Eq.(37), as shown by the following equations:

$$|\eta'\rangle_{S_1 S_2} \tag{41}$$

$$= \sum_{\substack{x_1, x_2 \in \{0,1\}^{\frac{N}{2}-i'} \\ x_1 \oplus x_2 = x}} (-1)^{v_1 \cdot x_1 \oplus v_2 \cdot x_2} \left|P_{\frac{N}{2}}(u_1, x_1)\right\rangle_{S_1} \left|P_{\frac{N}{2}}(u_2, x_2)\right\rangle_{S_2}$$

$$= \sum_{x_2 \in \{0,1\}^{\frac{N}{2}-i'}} (-1)^{v_1 \cdot (x+x_2) \oplus v_2 \cdot x_2} \left|P_{\frac{N}{2}}(u' \oplus u_2, x \right.$$

$$\left. \oplus x_2)\right\rangle_{S_1} \left|P_{\frac{N}{2}}(u_2, x_2)\right\rangle_{S_2}$$

$$= (-1)^{v_1 \cdot x} \sum_{x_2 \in \{0,1\}^{N-i}} (-1)^{(v_1 \oplus v_2) \cdot x_2} |P_N(u', x, u_2, x_2)\rangle_{S_1 S_2},$$

$$= Q_N |(u', x, u_2), \overline{v}'\rangle_{S_1 S_2}$$

where the third equality follows from the recursion of polar transform given in Fig. 3A, and where $v' = v_1 \oplus v_2$ in the fourth equality. Finally, $x$ can be determined from the measurement outcome.

In fact, Eq. (36), implies $(u', x) = P_{N/2}(m)$ (using $P_N^2 = I$ ), and therefore, $x$ is determined as follows:

$$x = P_{N/2}(m)|_{\chi'} \tag{42}$$

Hence, for the state $|q_N\rangle$ in Eq. (37), we have $Z = \{1, \ldots, i\}$, $X = \{i + 1, \ldots, N\}$, with $i = i' + \frac{N}{2}$, and the corresponding frozen states $|u\rangle_Z = |(u', x, u_2)\rangle_Z$, and $|\overline{v}\rangle_X := |\overline{v}'\rangle_X$.

Fig. 8B schematically represents the preparation of polar code state C11 of length $N$, given two equivalent polar code states C12, C13 of length $N/2$, when $i \leq N/2$, according to an example of the present invention.

Let $\mathcal{Z}' := \{1, \dots, i\}$, and $\mathcal{X}' := \left\{ i' + 1, \dots, \frac{N}{2} \right\}$, where $i' = i$. We assume that we have been given the following equivalent polar code states of length N/2:

$$\left| q_{N/2}^1 \right\rangle_{S_1} := Q_{N/2} \left| u_1, \overline{v}_1 \right\rangle_{S_1} \tag{43}$$

$$\left| q_{N/2}^2 \right\rangle_{S_2} := Q_{N/2} \left| u_2, \overline{v}_2 \right\rangle_{S_2} \tag{44}$$

where binary vectors $u_1$, $u_2 \in \{0, 1\}^{i'}$ and $v_1$, $v_2 \in \{0, 1\}^{N/2-i'}$ are known.

In this case, the preparation method corresponds to performing qubit wise Pauli $X \otimes X$ measurement circuits 72 on the corresponding qubits in $S_1$ and $S_2$.

Similar to the previous case, the outcome of Pauli $X \otimes X$ measurements gives:

$$m = P_{\frac{N}{2}}^\mathsf{T}(z, v') \in \{0, 1\}^{N/2} \tag{45}$$

where vector $v' = v_1 \oplus v_2$ and $z \in \{0,1\}^{i'}$ is a random vector. After the measurements, we get the following polar code state:

$$\left| q_N \right\rangle_{S_1 S_2} = Q_N \left| u', \overline{(v_1, z, v')} \right\rangle_{S_1 S_2} \tag{46}$$

where $u' = u_1 \oplus u_2$, and $z$ is determined from the measurement outcome in Eq. (45), as follows:

$$z = P_{N/2}^\mathsf{T}(m) \big|_{\mathcal{Z}'} \tag{47}$$

For the state $|q_N\rangle$ in Eq. (46), we have $Z = \{1, \dots, i\}$, $X = \{i + 1, \dots, N\}$, with $i = i'$, and the corresponding frozen states $|u\rangle_Z = |u'\rangle_Z$, and $|\overline{v}\rangle_X = |\overline{(v_1, z, v')}\rangle_X$.

In the general case of preparing any polar code of length $K = 2^k$, $k = 1$ to $n$, given two equivalent polar code states of length $K/2$, index $i = i_{j(n)}$ is to be replaced by $i_{j(k)}$ and index $i' = i_{j(n-1)}$ is to be replaced by $i_{j(k-1)}$. Furthermore, frozen sets $\mathcal{Z} = \mathcal{Z}_{j(n)}$, $X = X_{j(n)}$, $\mathcal{Z}' = \mathcal{Z}_{j(n-1)}$, and $X = X_{j(n-1)}$ are to be replaced by $\mathcal{Z}_{j(k)}$, $X_{j(k)}$, $\mathcal{Z}_{j(k-1)}$, and $X_{j(k-1)}$, respectively. The two equivalent polar code states $\left| q_{N/2}^1 \right\rangle_{S_1}$ and $\left| q_{N/2}^2 \right\rangle_{S_2}$, on which Pauli $Z \oplus Z$ or Pauli $X \oplus X$ measurement circuits are applied, are to be replaced by two equivalent polar code states $\left| q_{K/2}^1 \right\rangle_{S_{j(k-1)}^1}$ and $\left| q_{K/2}^2 \right\rangle_{S_{j(k-1)}^2}$.

Hence, for any level of recursion $k$, the quantum polar code $\left| q_{2^k} \right\rangle_{S_{j(k)}}$ is associated on the one hand, to the frozen states $|u\rangle_{Z_{j(k)}} = |(u', x, u_2)\rangle_{Z_{j(k)}}$, and $|\overline{v}\rangle_{X_{j(k)}} := |\overline{v}\rangle_{X_{j(k)}}$ when the Pauli $Z \oplus Z$ measurement circuits were applied on the corresponding qubits at the recursive level $k - 1$, and on the other hand, to the frozen states $|u\rangle_{Z_{j(k)}} = |u'\rangle_{Z_{j(k)}}$, and $|\overline{v}\rangle_{X_{j(k)}} = |\overline{(v_1, z, v')}\rangle_{X_{j(k)}}$ when the Pauli $X \oplus X$ measurement circuits were applied on the corresponding qubits of the precedent recursive level $k - 1$. The above frozen states are defined such that, $u' = u_1 \oplus u_2$, $v' = v_1 \otimes v_2$, $u_1, u_2 \in \{0, 1\}^{i_{j(k-1)}}$, $v_1, v_2 \in \{0, 1\}^{K/2-i_{j(k-1)}}$, with $i_{j(k-1)} = i_{j(k)} - 2^{k-1}$, for Pauli $Z \oplus Z$ measurements and with $i_{j(k-1)} = i_{j(k)}$, for Pauli $X \otimes X$ measurements.

The two equivalent polar code states $\left| q_{2^{k-1}}^1 \right\rangle_{S_{j(k-1)}^1}$ and $\left| q_{2^{k-1}}^2 \right\rangle_{S_{j(k-1)}^2}$ from the precedent recursive level $k - 1$, on which the Pauli $Z \otimes Z$ or Pauli $X \otimes X$ measurement circuits were applied, were associated with frozen states $|u_1\rangle_{Z_{j(k-1)}}$, $|v_1\rangle_{X_{j(k)}}$ and $|u_2\rangle_{Z_{j(k-1)}}$, $|v_2\rangle_{X_{j(k)}}$, respectively. Vectors $x$ and $z$ are estimated on the basis of the measurement outcome m of the corresponding Pauli measurement circuits and corresponding polar transform $P_{K/2}$ or $P_{K/2}^{\mathsf{T}}$, using $x = P_{K/2}(m)_{X_{j(k-1)}}$ when the Pauli $Z \otimes Z$ measurement circuits were applied on the corresponding qubits at the recursive level $k$ - 1, and $z = P_{K/2}^{\mathsf{T}}(m)|_{Z_{j(k-1)}}$ when the Pauli $X \otimes X$ measurement circuits were applied on the corresponding qubits of the precedent recursive level $k$ - 1.

In the particular case $k = n$ (i.e. $K = N$), the quantum polar code $|q_N\rangle$ is associated on the one hand, to the frozen states $|u\rangle_Z = |(u', x, u_2)\rangle_Z$, and $|\bar{v}\rangle_X := |\bar{v}'\rangle_X$ when the Pauli $Z \otimes Z$ measurement circuits were applied on the corresponding qubits of the precedent recursive level $k = n$ - 1, and on the other hand, to the frozen states $|u\rangle_Z = |u'\rangle_Z$, and $|\bar{v}\rangle_X = |(\overline{v_1, z, v'})\rangle_X$ when the Pauli $X \otimes X$ measurement circuits were applied on the corresponding qubits of the precedent recursive level $k = n$ - 1. In this case, $u' = u_1 \oplus u_2 \in \{0,1\}^{i'}$, $v' = v_1 \oplus v_2 \in \{0,1\}^{i'}$, $u_1, u_2 \in \{0, 1\}^{i'}$, $v_1, v_2 \in \{0, 1\}^{N/2-i}$, and $i' = i - N/2$ for Pauli $Z \otimes Z$ measurements and with $i' = i$, for Pauli $X \otimes X$ measurements. Vectors $x$ and $z$ are estimated on the basis of the measurement outcome $m$ of the corresponding Pauli measurement circuits according to Eqs. (43) and (48), respectively.

In the following, we restrict again the discussion to the case $k = n$, thus $K = N$, but again, this is only for simplicity of notation and consistency with the previous detailed description of Figs. 8A and 8B.

As described above, the binary vectors $x$ and $z$ are estimated on the basis of the measurement outcome m of the corresponding Pauli measurement circuits, and corresponding polar transform, either $P_{N/2}$ or $P_{N/2}^{\mathsf{T}}$, according to Eqs. (42) and (47), respectively.

In fact, the fault tolerance according to the method of the present invention comes down to estimating the binary vectors $x$ and $z$ in Eqs. (42) and (47), respectively, from the measurement outcomes of Pauli $Z \otimes Z$, or Pauli $X \otimes X$ measurements.

In what follows, for a binary vector u = $(u_1, ..., u_N) \in \{0,1\}^N$, we define sup$(u) := \{i \mid u_i = 1, i \in \{1, ..., N\}\}$, and wt(u) := $|$sup$(u)|$. Moreover, for a set $\mathcal{J} \subset \{1, ..., N\}$, we define $u|_{\mathcal{J}} \in \{0, 1\}^{|\mathcal{J}|}$ to be the part of $u$ corresponding to the indices in $\mathcal{J}$.

To consider the preparation procedure of polar code states, under the effect of noise, we suppose that noise acts on each qubit independently, and it causes random Pauli errors on each qubit, with some probability. The preparation method is said to be fault tolerant if for any $N$, the errors on quantum states $|q_{N/2}^1\rangle_{S_1}$, and $|q_{N/2}^2\rangle_{S_2}$ do not propagate to an increased number of qubits in $|q_N\rangle$.

In the case $i > N/2$, instead of Eqs. (43) and (44), we have the following error corrupted polar code states of length $N/2$:

$$\left|q_{N/2}^1\right\rangle_{S_1} := X^{e_{X_1}} Z^{e_{Z_1}} Q_{N/2} |u_1, \overline{v}_1\rangle_{S_1} \qquad (48)$$

$$\left|q_{N/2}^2\right\rangle_{S_2} := X^{e_{X_2}} Z^{e_{Z_2}} Q_{N/2} |u_2, \overline{v}_2\rangle_{S_2} \qquad (49)$$

where binary $u_1, u_2 \in \{0, 1\}^{i'}$ and $v_1, v_2 \in \{0, 1\}^{N/2-i}$ are known, with $i' = i - \frac{N}{2}$, and the binary vector errors $e_{X_1}, e_{Z_1}, e_{X_2}, e_{Z_2} \in \{0,1\}^{\frac{N}{2}}$ are unknown.

For simplicity, we start by assuming that Pauli $Z \otimes Z$ measurements can be performed perfectly, without errors.

The qubit wise Pauli $Z \otimes Z$ measurements on the corresponding qubits of $S_1$ and $S_2$ of Eqs. (48) and (49), give the following measurement m:

$$m = P_{N/2}(u', x) \oplus e_X \in \{0,1\}^{\frac{N}{2}} \qquad (50)$$

where $\boldsymbol{u'} = \boldsymbol{u_1} \otimes \boldsymbol{u_2}$ is known, and $x \in \{0,1\}^{\frac{N}{2}-i'}$, $\boldsymbol{e_X} := \boldsymbol{e_{X_1}} \oplus \boldsymbol{e_{X_2}}$ are unknown. After the measurements, the error corrupted polar code state on N qubits, depends on vector x according to the following expression:

$$|q_N\rangle_{S_1 S_2} = X^{\breve{e}_X} Z^{\breve{e}_Z} \, Q_N |(\boldsymbol{u'}, x, \boldsymbol{u_2}, \overline{\boldsymbol{v}}')\rangle_{S_1 S_2} \tag{51}$$

where $\boldsymbol{v'} = \boldsymbol{v_1} \otimes \boldsymbol{v_2}$, $\breve{e}_X = (\boldsymbol{e_{X_1}}, \boldsymbol{e_{X_2}})$, and $\breve{e}_Z = (\boldsymbol{e_{Z_1}}, \boldsymbol{e_{Z_2}})$.

The X (respectively, Z) error on $|q_N\rangle_{S_1 S_2}$ is simply equal to the X (respectively, Z) errors on $|q^1_{N/2}\rangle_{S_1}$ and $|q^2_{N/2}\rangle_{S_2}$ and thus, the method of preparation according to the present invention is fault tolerant.

However, in order to know the prepared polar code state, the vector $\boldsymbol{x}$ in Eq. (51) has to be estimated. Note that, in case no error occurs, that is $\boldsymbol{e_X} = 0$ in Eq. (50), then the vector x can be determined as in Eq. (42). However, if an unknown error $\boldsymbol{e_X} \neq 0$ occurs in Eq. (50), the equality in Eq. (42) for $\boldsymbol{x}$ does not hold anymore.

To estimate the vector $\boldsymbol{x}$, two techniques can be used, one based on error detection, and the other one based on error correction.

The error-detection based technique exploits the redundancy of measurements in the described preparation procedure. As described above in relation to Fig. 8A, let $\mathcal{Z}' := \{1, ..., i'\}$, and $\mathcal{X}' := \{i' + 1, ..., \frac{N}{2}\}$. After getting the measurement outcome $\boldsymbol{m}$ in Eq. (50), it is verified whether the equality $P_{N/2}(\boldsymbol{m})|_{Z'} = \boldsymbol{u'}$ holds or not.

If $P_{N/2}(\boldsymbol{m})|_{Z'} = \boldsymbol{u'}$, then the syndrome of the error $\boldsymbol{e_X}$ is zero, that is $P_{N/2}(\boldsymbol{e_X})|_{Z'} = \boldsymbol{0}$. Hence, it is assumed that no error occurred, and the value of vector $\boldsymbol{x}$ is estimated according to Eq. (42), that is $\boldsymbol{x} = P_{N/2}(\boldsymbol{m})|_{X'}$.

If $P_{N/2}(\boldsymbol{m})|_{Z'} \neq \boldsymbol{u'}$, then it is deduced that some error has occurred. Hence, the procedure is discarded and restarted, by taking fresh polar code states of length $N/2$.

In the general case, i.e., at any level $k$, when the Pauli $Z \otimes Z$ measurement circuits were applied on the corresponding qubits at the recursive level $k$ - 1, it is verified whether the equality $P_{K/2}(\boldsymbol{m})|_{Z_{j(k-1)}} = \boldsymbol{u'}$ holds or not. If $P_{K/2}(\boldsymbol{m})|_{Z_{j(k-1)}} = \boldsymbol{u'}$, then the vector $\boldsymbol{x}$ is estimated using $\boldsymbol{x} = P_{K/2}(\boldsymbol{m})_{X_{j(k-1)}}$, or otherwise it is discarded and the procedure is restarted by taking fresh polar code states of length $K/2$.

The error-correction based technique also exploits the redundancy of measurements in the described preparation procedure, but it determines the vector $\boldsymbol{x}$ using a maximum likelihood decision rule as follows.

As described above in relation to Fig. 8A, and going back to the specific case $K = N$ (for the simplicity and consistency of notation), let $\mathcal{Z}' := \{1, ..., i'\}$, and $\mathcal{X}' := \{i' + 1, ..., \frac{N}{2}\}$. Further, for an $i''$ such that $i' < i'' \leq \frac{N}{2}$, we define $\mathcal{X}'' := \{i' + 1, \cdots, i''\} \subseteq X'$, and $\mathcal{X}''_r := \mathcal{X}' \setminus \mathcal{X}''$. Hence, the binary vector x can be defined as follows:

$$\boldsymbol{x} = (\,\boldsymbol{x}|_{\mathcal{X}''}, \quad \boldsymbol{x}|_{\mathcal{X}''_r}) \tag{52}$$

The $\boldsymbol{x}|_{\mathcal{X}''_r}$ part of $\boldsymbol{x}$ in Eq. (52) is estimated from the measurement outcome $\boldsymbol{m}$ in Eq. (50), as follows:

$$\boldsymbol{x}|_{\mathcal{X}''_r} = P_{\frac{N}{2}}(\boldsymbol{m})|_{\mathcal{X}''_r} \tag{53}$$

A maximum likelihood decision for the $\boldsymbol{x}|_{\mathcal{X}''}$ part of $\boldsymbol{x}$ in Eq. (52), is then determined as follows:

$$\boldsymbol{x}|_{\mathcal{X}''} = \operatorname{argmin}_{\boldsymbol{a}|_{\mathcal{X}''}} \operatorname{wt}(\boldsymbol{m} \oplus P_{\frac{N}{2}}(\boldsymbol{u'}, \boldsymbol{a}|_{\mathcal{X}''}, \widehat{\boldsymbol{x}}|_{\mathcal{X}'_r})) \tag{54}$$

When $\boldsymbol{x}|_{\mathcal{X}''}$ is not unique, meaning that there are several values $\boldsymbol{a}|_{\mathcal{X}''}$ giving the minimum weight

$$m \oplus P_{\frac{N}{2}}\big(u, a|_{\mathcal{X}''}, x|_{\mathcal{X}''_r}\big)$$, the procedure is discarded and restarted again, by taking fresh polar code states of length N/2.

Finally, the above assumption that Pauli $Z \otimes Z$ measurements are perfect is not needed and may be relaxed. In fact, when Pauli $Z \otimes Z$ measurements are noisy, an extra error $e'_X$ on the measurement outcome m is introduced in Eq. (50), which becomes $m = P_{N/2}(u', x) \oplus e_X \oplus e'_X$.

However, $|q_N\rangle_{\mathcal{S}_1 \mathcal{S}_2}$ in Eq. (51) remains the same, except possibly an extra error introduced upon it by the noisy measurement.

In the case $i \leq N/2$, instead of Eqs. (43) and (44), we have the following error corrupted polar code states of length $N/2$:

$$\left|q_{N/2}^1\right\rangle_{\mathcal{S}_1} := X^{e_{X_1}} Z^{e_{Z_1}} Q_{N/2} |u_1, \overline{v}_1\rangle_{\mathcal{S}_1} \tag{55}$$

$$\left|q_{N/2}^2\right\rangle_{\mathcal{S}_2}^{-} := X^{e_{X_2}} Z^{e_{Z_2}} Q_{N/2} |u_2, \overline{v}_2\rangle_{\mathcal{S}_2} \tag{56}$$

where $u_1, u_2 \in \{0,1\}^{i'}$ and $v_1, v_2 \in \{0, 1\}^{N/2-i'}$ are known, with $i' = i$, and the errors $e_{X_1}, e_{Z_1}, e_{X_2}, e_{Z_2} \in \{0,1\}^{\frac{N}{2}}$ are unknown.

The qubit wise Pauli $X \otimes X$ measurements on the corresponding qubits of $\mathcal{S}_1$ and $\mathcal{S}_2$ of Eqs. (55) and (56) give the following:

$$m = P_{N/2}^{\mathsf{T}}(z, v') \oplus e_Z \in \{0,1\}^{\frac{N}{2}} \tag{57}$$

where $v' = v_1 \oplus v_2 \in \{0,1\}^{\frac{N}{2}-i'}$ is known, and $z \in \{0,1\}^{i'}, e_Z = e_{Z_1} \oplus e_{Z_2} \in \{0,1\}^{\frac{N}{2}}$ are unknown.

After the measurements, the error corrupted polar code state on $N$ qubits depends on vector x according to the following expression:

$$|q_N\rangle_{\mathcal{S}_1 \mathcal{S}_2} = X^{\tilde{e}_X} Z^{\tilde{e}_Z} Q_N |u', \overline{(v_1, z, v')}\rangle_{\mathcal{S}_1 \mathcal{S}_2} \tag{58}$$

where $u' = u_1 \oplus u_2 \in \{0,1\}^{i'}$, $\tilde{e}_X = (e_{X_1}, e_{X_2})$ and $\tilde{e}_Z = (e_{Z_1}, e_{Z_2})$.

Similarly, in order to know the prepared polar code state, the vector z has to be estimated. To estimate the vector z, two methods can be used, one based on error detection, and the other one based on error correction.

The error-detection based method exploits the redundancy of measurements in the described preparation procedure. As described above in relation to Fig. 8B, let $\mathcal{Z}' := \{1, ..., i'\}$, and $\mathcal{X}' := \{i' + 1, ..., \frac{N}{2}\}$. After getting the measurement outcome $m$ in Eq. (57), it is verified if the equality $P_{N/2}^{\mathsf{T}}(m)|_{\mathcal{X}'} = v'$ holds.

If $P_{N/2}^{\mathsf{T}}(m)|_{\mathcal{X}'} = v'$, then the syndrome of the error $e_Z$ is zero, that is $P_{N/2}^{\mathsf{T}}(e_Z)|_{\mathcal{X}'} = 0$. Hence, it is assumed that no error occurred, and the value of vector $z$ is estimated according to Eq. (47), that is $z = P_{N/2}^{\mathsf{T}}(m)|_{\mathcal{Z}'}$.

If $P_{N/2}^{\mathsf{T}}(m)|_{\mathcal{X}'} \neq v'$, then it is deduced that some error has occurred. Hence, the procedure is discarded and restarted, by taking fresh polar code states of length $N/2$.

In the general case, i.e., at any level $k$, when the Pauli $X \otimes X$ measurement circuits were applied on the corresponding qubits at the recursive level $k$ - 1, it is verified whether the equality

$$P_{K/2}^{\mathsf{T}}(m)|_{\mathcal{X}_{j(k-1)}} = v'$$

holds or not. If

$$P_{K/2}^{\mathsf{T}}(\boldsymbol{m})|_{x_{j(k-1)}} = \boldsymbol{v}'$$

, then the vector z is estimated using

$$\boldsymbol{z} = P_{K/2}^{\mathsf{T}}(\boldsymbol{m})|_{z_{j(k-1)}}$$

, or otherwise it is discarded and the procedure is restarted by taking fresh polar code states of length $K/2$.

The error-correction based method also exploits the redundancy of measurements in the described preparation procedure, but it determines the vector z using a maximum likelihood decision rule.

As described above with relation to Fig. 8B, let $\mathcal{Z}' := \{1, ..., i'\}$, and $X' := \{i' + 1, ..., \frac{N}{2}\}$. Further for *an i''*, such that $1 \le i'' \le i' + 1$, let $\mathcal{Z}'' := \{i'', ..., i'\} \subseteq Z'$, and $\mathcal{Z}_r'' := \mathcal{Z}' \setminus \mathcal{Z}''$. Hence, the binary vector z can be defined as follows:

$$\boldsymbol{z} = \left( \boldsymbol{z}|_{\mathcal{Z}_r''}, \quad \boldsymbol{z}|_{\mathcal{Z}''} \right) \tag{59}$$

The $\boldsymbol{z}|_{\mathcal{Z}_r''}$ part of z in Eq. (59), is estimated from the measurement outcome m in Eq. (57), as follows:

$$\boldsymbol{z}|_{\mathcal{Z}_r''} = P_{N/2}^{\mathsf{T}}(\boldsymbol{m})|_{\mathcal{Z}_r''} \tag{60}$$

A maximum likelihood decision for the $\boldsymbol{z}|_{\mathcal{Z}''}$ part of z in Eq. (59), is then determined as follows:

$$\boldsymbol{z}|_{\mathcal{Z}''} = \operatorname{argmin}_{\boldsymbol{b}|_{\mathcal{Z}''}} \operatorname{wt}(\boldsymbol{m} \oplus P_{N/2}(\boldsymbol{z}|_{\mathcal{Z}_r''}, \boldsymbol{b}|_{\mathcal{Z}''}, \boldsymbol{v})) \tag{61}$$

When $\boldsymbol{z}|_{\mathcal{Z}''}$ is not unique, meaning that there are several $\boldsymbol{b}|_{\mathcal{Z}''}$ giving the minimum weight $\operatorname{wt}(\boldsymbol{m} \oplus P_{N/2}(\boldsymbol{z}|_{\mathcal{Z}_r''}, \boldsymbol{b}|_{\mathcal{Z}''}, \boldsymbol{v}))$, the procedure is discarded and restarted again, by taking fresh polar code states of length $N/2$.

In the general case, i.e., at any level k, the fault tolerant preparation of quantum polar code states is represented by the estimation of vectors x and z. The binary vector x is defined as $\boldsymbol{x} = \left( \boldsymbol{x}|_{\mathcal{X}''}, \boldsymbol{x}|_{\mathcal{X}_r''} \right)$ with respect to the sets $\mathcal{X}_{j(k-1)} = \{i_{j(k-1)} + 1, ..., \frac{K}{2}\}$, $X'' := \{i_{j(k-1)} + 1, \cdots, i''\} \subseteq X_{j(k-1)}$ and $\mathcal{X}_r'' := \mathcal{X}_{j(k-1)} \setminus \mathcal{X}''$, with $i_{j(k-1)} \le i'' \le \frac{K}{2}$, and where $\boldsymbol{x}|_{\mathcal{X}_r''} = P_{K/2}(\boldsymbol{m})|_{\mathcal{X}_r''}$ and $\boldsymbol{x}|_{\mathcal{X}''} = \operatorname{argmin}_{\boldsymbol{a}|_{\mathcal{X}''}} \operatorname{wt}(\boldsymbol{m} \oplus P_{K/2}(\boldsymbol{u}', \boldsymbol{a}|_{\mathcal{X}''}, \boldsymbol{x}|_{\mathcal{X}_r''}))$. The binary vector z is defined as $\boldsymbol{z} = \left( \boldsymbol{z}|_{\mathcal{Z}_r''}, \boldsymbol{z}|_{\mathcal{Z}''} \right)$, with respect to the sets $\mathcal{Z}_{j(k-1)} = \{1, ..., i_{j(k-1)}\}$, $\mathcal{Z}'' := \{i'', ..., i_{j(k-1)}\} \subseteq \mathcal{Z}_{j(k-1)}$, and $\mathcal{Z}_r'' := \mathcal{Z}_{j(k-1)} \setminus \mathcal{Z}''$, with $1 \le i'' \le i_{j(k-1)} + 1$, and where $\boldsymbol{z}|_{\mathcal{Z}_r''} = P_{K/2}^{\mathsf{T}}(\boldsymbol{m})|_{\mathcal{Z}_r''}$ and $\boldsymbol{z}|_{\mathcal{Z}''} = \operatorname{argmin}_{\boldsymbol{b}|_{\mathcal{Z}''}} \operatorname{wt}(\boldsymbol{m} \oplus P_{K/2}(\boldsymbol{z}|_{\mathcal{Z}_r''}, \boldsymbol{b}|_{\mathcal{Z}''}, \boldsymbol{v}))$.

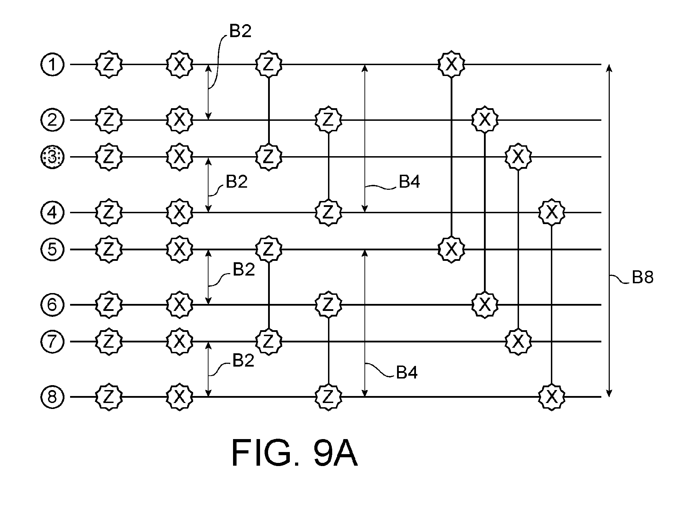

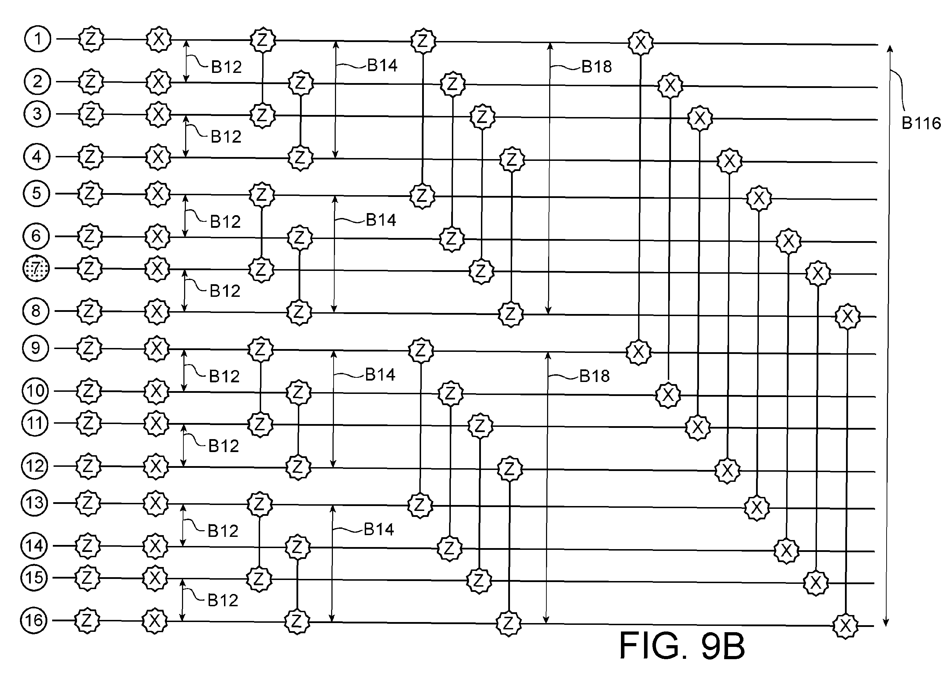

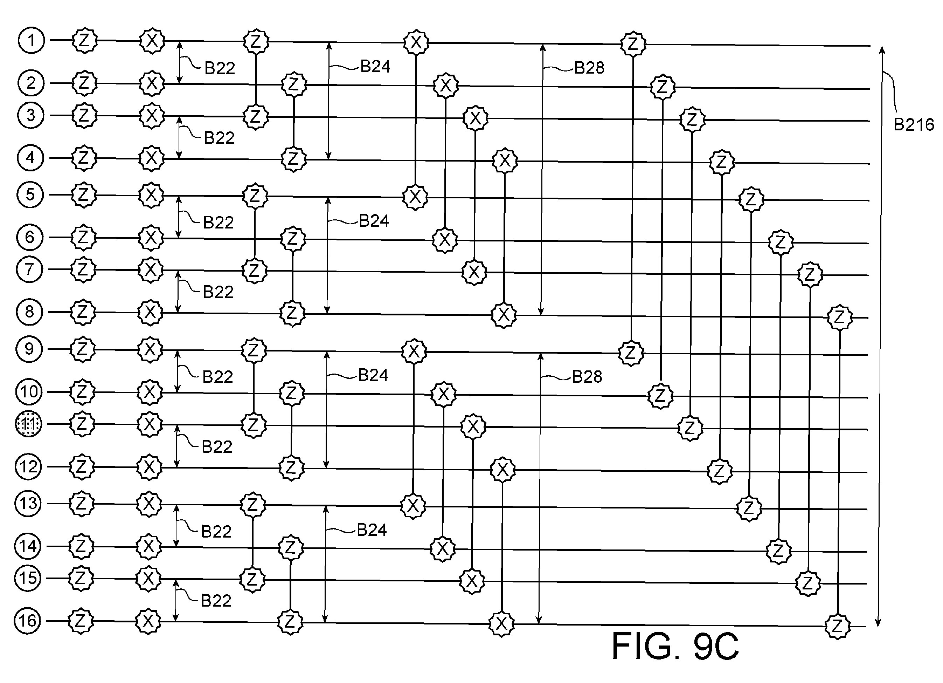

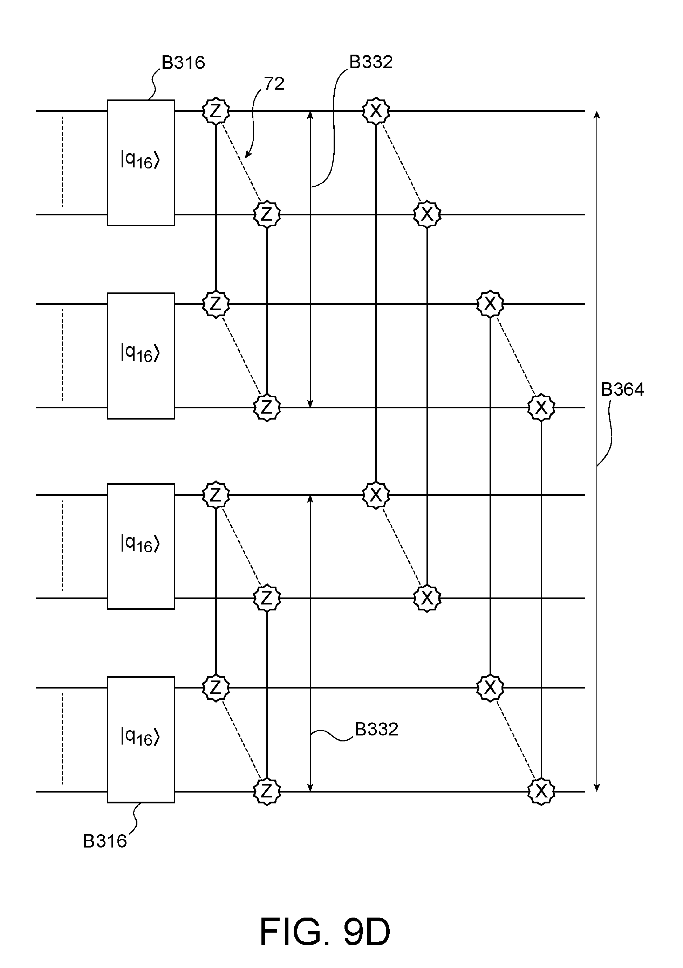

Figs. 9A, 9B, 9C and 9D schematically represent different examples of fault tolerant preparation of quantum polar code states, according to an embodiment of the present invention.

The four examples concern fault tolerant preparation of polar code states using Pauli $Z \otimes Z$ and $X \otimes X$ measurements, recursively. For these examples, the sets $\mathcal{Z}'$ and $\mathcal{X}'$, are specified at each level of recursion.

To ensure fault-tolerance, one of the two techniques described above can be used, based on either error detection or error correction.

To implement the error detection based technique, only the sets $\mathcal{Z}'$ and $\mathcal{X}'$, and the measurement outcome $\boldsymbol{m}$, have to be specified.

Further, for the error-correction based technique, when qubit wise Pauli $Z \otimes Z$ measurements are performed, the

set $\mathcal{X}''$ (hence, also $\mathcal{X}_r''$) is specified, and thus, Eqs. (53) and (54) are used to estimate vector x. When qubit wise Pauli $X$ $\otimes X$ measurements are performed, the set $\mathcal{Z}''$ (hence, also $\mathcal{Z}_r''$) is specified, and thus, Eqs. (60) and (61) are used to estimate vector z.

In the description of Figs. 9A, 9B, 9C and 9D, we consider the example of error-correction based technique.

In particular, Fig. 9A concerns the recursive preparation of a quantum polar code $|q_8\rangle$ of length $N = 8$ with $\mathcal{Z} = \{1,2,3\}$ and $\mathcal{X} = \{4,5,6,7,8\}$.

A single qubit Pauli $Z$ measurement is performed on each qubit such to initialize them into a computational basis state. Alternatively, any other method to initialize the qubits in the computational basis can be used.

Then, at each level of recursion, polar code states of lengths $N = 2, 4, 8$ are prepared, as follows:

At the first level of recursion, four polar code states $\left\{ |q_2^1\rangle, |q_2^2\rangle, |q_2^3\rangle, |q_2^4\rangle \right\}$ of length $N = 2$, with $\mathcal{Z} = \{1\}$ and $X = \{2\}$ are prepared represented by the four blocks B2. Here, $\mathcal{Z} = \{1\}$ and $\mathcal{X} = \{2\}$ refer to the first and second qubit of each of the four blocks B2. Here $\mathcal{Z}' = \{1\}$, $\mathcal{X}' = \varnothing$, and $\mathcal{Z}'' = \varnothing$, hence $\mathcal{Z}_r'' = \mathcal{Z}'$. The estimate of z $\in \{0,1\}$ is determined from Eq. (60), as follows:

$$z = P_1^\top(\boldsymbol{m})|_{\mathcal{Z}'} = \boldsymbol{m}, \text{where } \boldsymbol{m} \in \{0,1\} \qquad (62)$$

At the second level of recursion, two polar code states $\left\{ |q_4^1\rangle, |q_4^2\rangle \right\}$ of length $N = 4$, with $\mathcal{Z} = \{1,2,3\}$ and $\mathcal{X} = \{4\}$ are prepared, represented by the two blocks B4. Here, $\mathcal{Z} = \{1,2,3\}$ and $\mathcal{X} = \{4\}$ refer to the first, second, third, and fourth qubit of each of the two blocks B4. Then, $\mathcal{Z}' = \{1\}$, $\mathcal{X}' = \{2\}$, and $\mathcal{X}'' = \varnothing$, hence $\mathcal{X}_r'' = \mathcal{X}'$. The estimate of $\boldsymbol{x}$ $\in \{0,1\}$ is determined from Eq. (53), as follows:

$$\boldsymbol{x} = P_2(\boldsymbol{m})|_{\mathcal{X}'} = m_1 \oplus m_2, \text{where } \boldsymbol{m} = (m_1, m_2) \in \{0,1\}^2 \qquad (63)$$

Finally, at the third level of recursion, the desired polar code state $|q_8\rangle$ of length $N = 8$, with $\mathcal{Z} = \{1,2,3\}$ and $\mathcal{X} = \{4,5,6,7,8\}$ is prepared, represented by the single blocks B8. Here $\mathcal{Z}' = \{1,2,3\}$, $\mathcal{X}' = \{4\}$, and $\mathcal{Z}'' = \varnothing$, hence $\mathcal{Z}_r'' = \mathcal{Z}'$. The estimate of z $\in \{0,1\}^3$ is determined from Eq. (60), as follows:

$$z = P_4^\top(\boldsymbol{m})|_{\mathcal{Z}'} = (m_1, m_1 \oplus m_2, m_1 \oplus m_3), \qquad (64)$$

where $m = (m_1, m_2, m_3, m_4) \in \{0,1\}^4$.

Fig. 9B concerns the recursive preparation of a quantum polar code $|q_{16}\rangle$ of length $N = 16$, with $\mathcal{Z} = \{1, ..., 7\}$ and $\mathcal{X} = \{8, ...,16\}$.

The first two levels of recursion are the same as the first two level of recursions in Fig. 9A, except that there are twice as many polar code states of length $N = 2$ represented by the eight blocks B12, and twice as many polar code states of length $N = 4$ represented by the four blocks B14. Thus, only the third and fourth levels of recursion will be described hereafter.

At the third level of recursion, two polar code states of length $N = 8$, with $\mathcal{Z} = \{1, ..., 7\}$ and $X = \{8\}$ are prepared, represented by the two blocks B18. Here, $\mathcal{Z}' = \{1,2,3\}$ and $\mathcal{X}' = \{4\}$, then, $X'' = X' = \{4\}$, hence $\mathcal{X}_r'' = \varnothing$. The estimate of $\boldsymbol{x}$ $\in \{0,1\}$ is then determined from Eq. (54), as follows:

$$\boldsymbol{x} = \operatorname{argmin}_{\boldsymbol{a} \in \{0,1\}} \operatorname{wt}(\boldsymbol{m} \oplus P_4(\boldsymbol{u}', \boldsymbol{a})) \qquad (65)$$

Recall that if $x$ is not unique, the prepared state of length $N = 8$ is discarded without proceeding to the next level of recursion and the whole procedure is restarted back from the initialization.

Finally, at the fourth level of recursion, the desired polar code state $|q_{16}\rangle$ of length $N = 16$, with $\mathcal{Z} = \{1, ..., 7\}$ and $\mathcal{X} = \{8, ...,16\}$ is prepared, represented by the single block B116. We have $\mathcal{Z}' = \{1, ..., 7\}$, $\mathcal{X}' = \{8\}$, and $\mathcal{Z}'' = \varnothing$, hence

$\mathcal{Z}_r'' = \mathcal{Z}'$ . The estimate of $z \in \{0,1\}^7$ is then determined from Eq. (60), as follows:

$$z = P_8^\top(\boldsymbol{m})|_{\mathcal{Z}'} \tag{66}$$
$$= (m_1, m_1 \oplus m_2, m_1 \oplus m_3, m_1 \oplus m_2 \oplus m_3 \oplus m_4, m_1 \oplus m_5, m_1 \oplus m_2 \oplus m_5 \oplus m_6, m_1 \oplus m_3 \oplus m_5 \oplus m_7)$$

where $m = (m_1, ..., m_8) \in \{0,1\}^8$.

Fig. 9C concerns the recursive preparation of a quantum polar code $|q_{16}\rangle$ of length $N = 16$, with $\mathcal{Z} = \{1, ... , 11\}$ and $X = \{12, ...,16\}$.

At the first two levels of recursion, eight polar code states of length $N = 2$ and four polar code states of length $N = 4$ are prepared, represented by eight blocks B22 and four blocks B24, respectively.

At the third level of recursion, two instances of polar code states of length $N = 8$, represented by two blocks B28, with $Z = \{1,2,3\}$ and $X = \{4,5,6,7,8\}$, are prepared. This third level is similar to the third level of the first example depicted in Fig. 9A which was already described. Hereafter, we describe the fourth level of recursion.

At the fourth level of recursion, the desired polar code state $|q_{16}\rangle$ of length N = 16, with Z = {1, ..., 11} and X = {12, ...,16} is prepared, represented by a single block B216. Here, Z' = {1,2,3} and X' = {4,5,6,7,8}. We take X'' = {4}, and hence $\mathcal{X}_r'' = \{5,6,7,8\}$ .

From Eq. (53), the $\boldsymbol{x}|_{\mathcal{X}_r''} \in \{0,1\}^4$ part of x is estimated, as follows:

$$\boldsymbol{x}|_{\mathcal{X}_r''} = P_8(\boldsymbol{m})|_{\mathcal{X}_r''} \tag{67}$$
$$= (m_5 \oplus m_6 \oplus m_7 \oplus m_8, m_6 \oplus m_8, m_7 \oplus m_8, m_8)$$

where m = $(m_1, ..., m_8) \in \{0,1\}^8$.

From Eq. (54), the $\boldsymbol{x}|_{X''} \in \{0,1\}$ part of x is estimated, as follows:

$$\boldsymbol{x}|_{\mathcal{X}''} = \operatorname{argmin}_{\boldsymbol{a}\in\{0,1\}} \operatorname{wt}\left(\boldsymbol{m} \oplus P_8(\boldsymbol{u}', \boldsymbol{a}, \boldsymbol{x}|_{\mathcal{X}_r''})\right) \tag{68}$$

If $x|_{X''}$ is not unique, the prepared state of length $N = 16$ is discarded and the whole procedure is restarted back from the initialization.

Fig. 9D concerns the recursive preparation of a quantum polar code $|q_{64}\rangle$ of length $N = 64$, with $Z = \{1, ..., 23\}$ and $X = \{24, ...,64\}$.

Here, after the fourth level of recursion, we have four blocks B316 of polar code states of length $N = 16$, with $Z = \{1, ..., 7\}$ and $X = \{8, ...,16\}$, as in the second example described in relation to Fig. 9B. Below, only the remaining two levels of recursion are described.

At the fifth level of recursion, two polar code states of length $N = 32$, with $Z = \{1, ..., 23\}$ and $X = \{24, ...,32\}$, represented by the two blocks B332 are prepared. Here, we have Z' = {1, ..., 7} and X' = {8, ...,16}. We take X'' = {8}, and hence $\mathcal{X}_r'' = \{9, ..., 16\}$ .

From Eq. (53), the $\boldsymbol{x}|_{\mathcal{X}_r'} \in \{0,1\}^8$ part of x is estimated, that is, $\boldsymbol{x}|_{\mathcal{X}_r''} = P_{16}(\boldsymbol{m})|_{\mathcal{X}_r''}$, where $\boldsymbol{m} \in \{0,1\}^{16}$.

Further, from Eq. (54), we get the estimate $\boldsymbol{x}|_{\mathcal{X}''} = \operatorname{argmin}_{\boldsymbol{a}\in\{0,1\}} \operatorname{wt}\left(\boldsymbol{m} \oplus P_8(\boldsymbol{u}', \boldsymbol{a}, \boldsymbol{x}|_{\mathcal{X}_r''})\right) \in \{0,1\}$ .

At the sixth level of recursion, the desired polar code state $|q_{64}\rangle$ of length N = 64, with Z = {1, ..., 23} and X = {24, ...,64} is prepared, represented by the ingle block B364. Here, we have $\mathcal{Z}' = \{1, ..., 23\}$ and X' = {24, ...,32}. We take Z'' = Ø, and hence $\mathcal{Z}_r'' = \mathcal{Z}'$ .

From Eq. (60), we get the estimate of z $\in \{0,1\}^{23}$, that is, $\boldsymbol{z} = P_{32}^\top(\boldsymbol{m})|_{\mathcal{Z}'}$ , where $\boldsymbol{m} \in \{0,1\}^{32}$.

The fault tolerant preparation of polar code states according to the embodiments of the present invention is an important resource for exploiting quantum polar codes for fault tolerant systems of quantum computation.

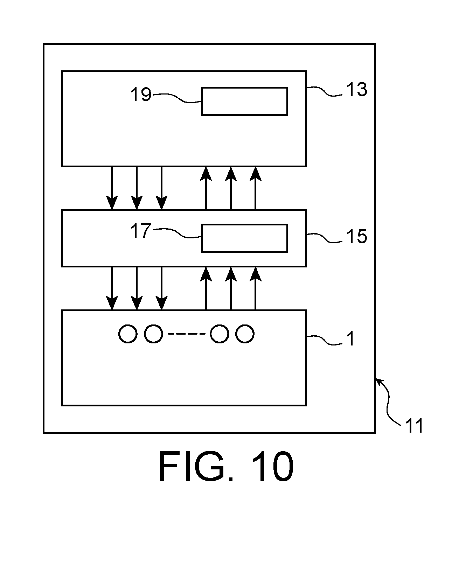

Fig. 10 schematically represents a computing system according to a preferred embodiment of the present invention.

The computing system 11 comprises a classical computing system 13, a classical-quantum interface 15 and a quantum computing system 1 configured to prepare quantum polar codes according to the above embodiments of the present invention. The quantum computing system 1 is coupled to the classical computing system 13 via the classical-quantum interface 15.

The classical-quantum interface 15 comprises a syndrome extractor 17 configured to extract a syndrome out of quantum measurements implemented by the quantum computing system 1.

The classical computing system 13 comprises a classical decoder 19 configured to decode the quantum polar codes prepared according to the above methods by implementing successive cancelation decoding.

**Claims**

1. Method of preparation of quantum polar code states in a quantum computing system materializing qubits, quantum gates and quantum circuits, comprising the following steps:

   - prepare (E1) an initial quantum system $\mathcal{S} = \{1, ..., N\}$, of $N = 2^n$ single-qubit states of said qubits, said states being associated to an initial quantum base,

   - prepare (E5) a quantum polar code $|q_{2^n}\rangle_{\mathcal{S}}$ of codelength $N = 2^n$ referenced by predetermined first and second sets of frozen indices $Z = \{1, ..., i\}$, $X = \{i + 1, ..., N\}$ with respect to first and second quantum bases respectively, said quantum polar code $|q_{2^n}\rangle_{\mathcal{S}}$ being prepared by recursively using two qubit Pauli measurement $P \otimes P$ circuits (7) wherein, at each recursive level $k$, where $k = 1$ $to$ $n$, prepare a set of $2^n/2^k$ quantum polar code states

   $$\left\{ |q_{2^k}\rangle_{\mathcal{S}_{j(k)}}, j(k) = 1 \; to \;\; 2^n/2^k \right\}$$

   of codelengths $2^k$, referenced by corresponding sets $\mathcal{S}_{j(k)}$ of indices comprising first and second sets of frozen indices $\mathcal{Z}_{j(k)} = \{1_j, ..., i_{j(k)}\}$ and $\mathcal{X}_{j(k)} = \left\{ (i+1)_{j(k)}, ..., 2^k_{j(k)} \right\}$, each quantum polar code state $|q_{2^k}\rangle_{\mathcal{S}_{j(k)}}$ being prepared by applying two qubit Pauli measurement $P \otimes P$ circuits (7) on two equivalent polar code states

   $|q^1_{2^{k-1}}\rangle_{\mathcal{S}^1_{j(k-1)}}$ and $|q^2_{2^{k-1}}\rangle_{\mathcal{S}^2_{j(k-1)}}$ belonging to the output of the antecedent recursive level $k - 1$ and referenced by two corresponding sets of indices $\mathcal{S}^1_{j(k-1)}$ and $\mathcal{S}^2_{j(k-1)}$ each of which comprising first and second sets of frozen indices $\mathcal{Z}_{j(k-1)}$ and $X_{j(k-1)}$ corresponding to first and second quantum bases respectively, the antecedent of the first recursive level $k = 1$ being said initial quantum system of single-qubit states.

2. Method of preparation of quantum polar code states according to claim 1, **characterised in that** said initial quantum system of single-qubit states is prepared by applying a single-qubit Pauli measurement P circuit (3) on each qubit of a predetermined input of N qubit quantum states.

3. Method of preparation of quantum polar code states according to claim 2, **characterised in that** said single-qubit Pauli measurement circuit is a Z measurement circuit and said initial quantum base is a computational base.

4. Method of preparation of quantum polar code states according to anyone of the preceding claims, **characterised in that** said first and second quantum bases are computational and phase bases states respectively.

5. Method of preparation of quantum polar code states according to anyone of the preceding claims, **characterised in that** at the recursive level $k$, said two qubit Pauli measurement $P \otimes P$ circuits applied on said two equivalent polar code states $|q^1_{2^{k-1}}\rangle_{\mathcal{S}^1_{j(k-1)}}$ and $|q^2_{2^{k-1}}\rangle_{\mathcal{S}^2_{j(k-1)}}$ are $Z \otimes Z$ measurement circuits when the last index $i_{j(k)}$ of the corresponding first set of indices $\mathcal{Z}_{j(k)} := \{1_j, ..., i_{j(k)}\}$ is greater than $2^{k-1}$ and are $X \otimes X$ measurement circuits when said last index $i_{j(k)}$ is less than or equal to $2^{k-1}$.

6. Method of preparation of quantum polar code states according to claim 5, **characterised in that** for the last recursion level, $k = n$, the corresponding index $i_{j(n)} = i$, where $i \in \mathcal{S} = \{1, ..., N\}$ is the selected information index used to encode quantum information, and for $k < n$, the value of $i_{j(k)} \in \{1, ..., K = 2^k\}$ is determined from that of $i_{j(k+1)} \in \{1, ..., 2K = 2^{k-1}\}$, such that if $i_{j(k+1)} > K$, then $i_{j(k)} = i_{j(k+1)} - K$ and otherwise, $i_{j(k)} = i_{j(k+1)}$.

7. Method of preparation of quantum polar code states according to claim 5 or 6, **characterised in that** for any level of recursion $k$, the quantum polar code $\left|q_{2^k}\right\rangle_{\mathcal{S}_{j(k)}}$ is associated on the one hand, to the frozen states $|u\rangle_{Z_{j(k)}} = |(u', x, u_2)\rangle_{Z_{j(k)}}$, and $|\bar{v}\rangle_{\mathcal{X}_{j(k)}} := |\bar{v}'\rangle_{\mathcal{X}_{j(k)}}$ when the Pauli $Z \otimes Z$ measurement circuits were applied on the corresponding qubits at the recursive level $k - 1$, and on the other hand, to the frozen states $|u\rangle_{Z_{j(k)}} = |u'\rangle_{Z_{j(k)}}$, and $|\bar{v}\rangle_{\mathcal{X}_{j(k)}} = \left|\overline{(v_1, z, v')}\right\rangle_{\mathcal{X}_{j(k)}}$ when the Pauli $X \otimes X$ measurement circuits were applied on the corresponding qubits of the precedent recursive level $k - 1$, where $u' = u_1 \oplus u_2$, $v' = v_1 \oplus v_2$, $u_1, u_2 \in \{0, 1\}^{i_{j(k-1)}}$, $v_1, v_2 \in \{0, 1\}^{K/2 - i_{j(k-1)}}$, with $i_{j(k-1)} = i_{j(k)} - 2^{k-1}$, for Pauli $Z \otimes Z$ measurements, and with $i_{j(k-1)} = i_{j(k)}$, for Pauli $X \otimes X$ measurements, where the two equivalent polar code states $\left|q_{2^{k-1}}^1\right\rangle_{\mathcal{S}_{j(k-1)}^1}$ and $\left|q_{2^{k-1}}^2\right\rangle_{\mathcal{S}_{j(k-1)}^2}$ from the precedent recursive level $k - 1$, on which the Pauli $Z \otimes Z$ or Pauli $X \otimes X$ measurement circuits were applied, were associated with frozen states $|u_1\rangle_{Z_{j(k-1)}}$, $|v_1\rangle_{\mathcal{X}_{j(k-1)}}$ and $|u_2\rangle_{Z_{j(k-1)}}$, $|v_2\rangle_{\mathcal{X}_{j(k-1)}}$, respectively, and where vectors x and z are estimated on the basis of the measurement outcome m of the corresponding Pauli measurement circuits and corresponding polar transform $P_{K/2}$ or $P_{K/2}^T$, using $x = P_{K/2}(m)|_{\mathcal{X}_{j(k-1)}}$ when the Pauli $Z \otimes Z$ measurement circuits were applied on the corresponding qubits at the precedent recursive level $k - 1$, and z = $P_{K/2}^T(m)|_{Z_{j(k-1)}}$ when the Pauli $X \otimes X$ measurement circuits were applied on the corresponding qubits of the precedent recursive level $k - 1$.

8. Method of preparation of quantum polar code states according to claim 7, **characterized in that** the method of preparation is fault tolerant according to the following steps:

   - when the Pauli $Z \otimes Z$ measurement circuits were applied on the corresponding qubits at the recursive level $k - 1$, if

$$P_{K/2}(m)|_{Z_{j(k-1)}} = u',$$

   then the vector x is estimated using $x = P_{K/2}(m) |_{\mathcal{X}_{j(k-1)}}$, or otherwise it is discarded and the procedure is restarted by taking fresh polar code states of length K/2, and
   - when the Pauli $X \otimes X$ measurement circuits were applied on the corresponding qubits at the recursive level $k - 1$, if $P_{K/2}^T(m)|_{\mathcal{X}_{j(k-1)}} = v'$, then the vector z is estimated using z = $P_{K/2}^T(m)|_{Z_{j(k-1)}}$, or otherwise it is discarded and the procedure is restarted by taking fresh polar code states of length K/2.

9. Method of preparation of quantum polar code states according to claim 8, **characterised in that** the fault tolerant preparation of quantum polar code states is represented by the estimation of vectors x and z wherein, $x = (x|_{\mathcal{X}''}, x|_{\mathcal{X}_r''})$ with respect to the sets $\mathcal{X}_{j(k-1)} = \{i_{j(k-1)} + 1, ..., \frac{K}{2}\}$, $X'' := \{i_{j(k-1)} + 1, \cdots, i''\} \subseteq X_{j(k-1)}$ and $\mathcal{X}_r'' := \mathcal{X}_{j(k-1)} \backslash \mathcal{X}''$, with $i_{j(k-1)} \le i'' \le \frac{K}{2}$, and where $x|_{\mathcal{X}_r''} = P_{K/2}(m)|_{\mathcal{X}_r''}$ and $x|_{X''} = \operatorname{argmin}_{a|_{X''}}$ $\operatorname{wt}\left(m \oplus P_{K/2}(u', a|_{\mathcal{X}''}, x|_{\mathcal{X}_r''})\right)$, and wherein, z = $(z|_{\mathcal{Z}_r''}, z|_{\mathcal{Z}''})$, with respect to the sets $\mathcal{Z}_{j(k-1)} = \{1, ..., i_{j(k-1)}\}$, $\mathcal{Z}'' := \{i'', ..., i_{j(k-1)}\} \subseteq$, and, $\mathcal{Z}_r'' := \mathcal{Z}_{j(k-1)} \backslash \mathcal{Z}''$ with $1 \le i'' \le i_{j(k-1)} + 1$, and where $z|_{\mathcal{Z}_r''} = P_{K/2}^T(m)|_{\mathcal{Z}_r''}$ and $z|_{\mathcal{Z}''} = \operatorname{argmin}_{b|_{\mathcal{Z}''}} \operatorname{wt}(m \oplus P_{K/2}(z|_{\mathcal{Z}_r''}, b|_{\mathcal{Z}''}, v))$ .

10. Method of preparation of quantum polar code states according to claim 9, **characterised in that** when $x|x''$ is not unique, it is discarded and the procedure is restarted by taking fresh polar code states of length K/2 and similarly, when $z|z''$ is not unique, it is discarded and the procedure is restarted by taking fresh polar code states of length K/2.

11. Quantum computing system for the preparation of quantum polar code states, comprising:

- a set of single qubit Pauli measurement circuits (3) configured to prepare an initial quantum system $S = \{1, ..., N\}$, of $N = 2^n$ single-qubit states of qubits of said system, said states being associated to an initial quantum base,

- a set of two qubit Pauli measurement circuits (7) configured to recursively prepare a quantum polar code $|q_{2^n}\rangle_S$ of codelength $N = 2^n$, wherein at each recursive level $k$, where $k = 1\ to\ n$, a set of $2^n/2^k$ quantum polar code states

$$\left\{ |q_{2^k}\rangle_{S_{j(k)}}, j(k) = 1\ to\ 2^n/2^k \right\}$$

of codelengths $2^k$, referenced by corresponding sets $S_{j(k)}$ of indices comprising first and second sets of frozen indices $\mathcal{Z}_{j(k)} = \{1_j, ..., i_{j(k)}\}$ and $\mathcal{X}_{j(k)} = \left\{ (i+1)_{j(k)}, ..., 2^k_{j(k)} \right\}$ is prepared, each quantum polar code state $|q_{2^k}\rangle_{S_{j(k)}}$ being prepared by the application of two qubit Pauli measurement $P \otimes P$ circuits on two equivalent polar code states $|q_{2^{k-1}}^1\rangle_{S^1_{j(k-1)}}$ and $|q_{2^{k-1}}^2\rangle_{S^2_{j(k-1)}}$ belonging to the output of the antecedent recursive level k - 1 and referenced by two corresponding sets of indices $S^1_{j(k-1)}$ and $S^2_{j(k-1)}$ each of which comprising first and second sets of frozen indices $\mathcal{Z}_{j(k-1)}$ and $\mathcal{X}_{j(k-1)}$ corresponding to first and second quantum bases respectively, the antecedent of the first recursive level k = 1 being said initial quantum system of single-qubit states.

12. Computing system comprising a classical computing system (13), a classical-quantum interface (15), and a quantum computing system according to claim 11, **characterised in that** the quantum computing system (1) is coupled to the classical computing system (13) via the classical-quantum interface (15).

13. Computing system according to claim 12, **characterised in that** the classical computing system (13) comprises a syndrome extractor (17) and a classical decoder (19), the syndrome extractor (17) being configured to extract a syndrome out of quantum measurements implemented by the quantum computing system, and the classical decoder (19) being configured to decode the quantum polar code by implementing successive cancelation decoding.

**Patentansprüche**

1. Verfahren zum Herstellen von Quantenpolarcodezuständen in einem Quantenrechensystem, das Qubits, Quantengatter und Quantenschaltkreise materialisiert, umfassend die folgenden Schritte:

- Herstellen (E1) eines anfänglichen Quantensystems $S = \{1, ..., N\}$, von $N = 2^n$ Einzelqubit-Zuständen der Qubits, wobei die Zustände einer anfänglichen Quantenbasis zugeordnet sind,

- Herstellen (E5) eines Quantenpolarcodes $|q_{2^n}\rangle_S$ der Codelänge $N = 2^n$, der durch vorbestimmte erste und zweite Sätze eingefrorener Indizes Z = {1, ..., i}, X = {i + 1, ...,N} in Bezug auf erste und zweite Quantenbasen referenziert wird, wobei der Quantenpolarcode $|q_{2^n}\rangle_S$ unter rekursiver Verwendung von zwei Qubit-Pauli- $P \otimes P$ -Messkreisen (7) hergestellt wird, wobei auf jeder rekursiven Ebene k , wobei $k = 1\ to$ n , ein Satz von $2^n/2^k$

Quantenpolarcodezuständen

$$\left\{|q_{2^k}\rangle_{\mathcal{S}_{j(k)}}, j(k) \; = \; 1 \; bis \; 2^n/2^k\right\}$$

der Codelängen $2^k$, referenziert durch entsprechende Sätze $\mathcal{S}_{j(k)}$ von Indizes, umfassend erste und zweite Sätze eingefrorener Indizes $\mathcal{Z}_{j(k)} = \{1_j, ..., i_{j(k)}\}$ und ,

$$\mathcal{X}_{j(k)} \; = \; \left\{(i+1)_{j(k)}, ..., 2^k_{j(k)}\right\}$$

hergestellt wird, wobei jeder Quantenpolarcodezustand $|q_{2^k}\rangle_{\mathcal{S}_{j(k)}}$ $P \otimes P$-Messkreisen (7) auf zwei äquivalente

Polarcodezustände $|q^1_{2^{k-1}}\rangle_{\mathcal{S}^1_{j(k-1)}}$ und $|q^2_{2^{k-1}}\rangle_{\mathcal{S}^2_{j(k-1)}}$ hergestellt wird, die zur Ausgabe der vorhergehenden rekursiven Ebene $k$ - 1 gehören und durch zwei entsprechende Sätze von Indizes $\mathcal{S}^1_{j(k-1)}$ und $\mathcal{S}^2_{j(k-1)}$

referenziert werden, von denen jeder erste und zweite Sätze von eingefrorenen Indizes $\mathcal{Z}_{j(k-1)}$ und $\mathcal{X}_{j(k-1)}$ umfasst, die jeweils der ersten und zweiten Quantenbasis entsprechen, wobei der Vorgänger der ersten rekursiven Ebene $k$ = 1 das anfängliche Quantensystem von Einzelqubit-Zuständen ist.

2. Verfahren zum Herstellen von Quantenpolarcodezuständen nach Anspruch 1, **dadurch gekennzeichnet, dass** das anfängliche Quantensystem von Einzelqubit-Zuständen durch Anwenden eines Einzelqubit-Pauli-$P$-Messkreises (3) auf jedes Qubit eines vorbestimmten Eingangs von $N$ Qubit-Quantenzuständen hergestellt wird.

3. Verfahren zum Herstellen von Quantenpolarcodezuständen nach Anspruch 2, **dadurch gekennzeichnet, dass** der Einzelqubit-Pauli-Messkreis ein Z-Messkreis ist und die anfängliche Quantenbasis eine Berechnungsbasis ist.

4. Verfahren zum Herstellen von Quantenpolarcodezuständen nach einem der vorhergehenden Ansprüche, **dadurch gekennzeichnet, dass** die ersten und zweiten Quantenbasen Rechen- bzw. Phasenbasis-Zustände sind.

5. Verfahren zum Herstellen von Quantenpolarcodezuständen nach einem der vorhergehenden Ansprüche, **dadurch gekennzeichnet, dass** auf der rekursiven Ebene k die beiden Qubit-Pauli- $P \otimes P$ -Messkreise, die auf die beiden äquivalenten Polarcodezustände $|q^1_{2^{k-1}}\rangle_{\mathcal{S}^1_{j(k-1)}}$ und $|q^2_{2^{k-1}}\rangle_{\mathcal{S}^2_{j(k-1)}}$ angewendet werden, Z $\otimes$ Z -Messkreise sind, wenn der letzte Index $i_{j(k)}$ des entsprechenden ersten Satzes von Indizes $\mathcal{Z}_{j(k)}$ :={1_j, ..., i_{j(k)}} größer als $2^{k-1}$ ist, und X $\otimes$ X -Messkreise sind, wenn der letzte Index $i_{j(k)}$ kleiner oder gleich $2^{k-1}$ ist.

6. Verfahren zum Herstellen von Quantenpolarcodezuständen nach Anspruch 5, **dadurch gekennzeichnet, dass** für die letzte rekursive Ebene, k = n, der entsprechende Index $i_{j(n)}$ = i, wobei $i \in \mathcal{S}$ = {1, ...,N}, der ausgewählte Informationsindex ist, der zum Codieren von Quanteninformationen verwendet wird, und für $k < n$ der Wert von $i_{j(k)} \in$ {1, ..., K = $2^k$} aus dem Wert $i_{j(k+1)} \in$ {1, ...,2K = $2^{k+1}$} bestimmt wird, sodass, wenn $i_{j(k+1)} > K$, dann $i_{j(k)} = i_{j(k+1)}$ - $K$ und andernfalls $i_{j(k)} = i_{j(k+1)}$.

7. Verfahren zum Herstellen von Quantenpolarcodezuständen nach Anspruch 5 oder 6, **dadurch gekennzeichnet, dass** für jede rekursive Ebene k der Quantenpolarcode $|q_{2^k}\rangle_{\mathcal{S}_{j(k)}}$ einerseits den eingefrorenen Zuständen $|u\rangle_{\mathcal{Z}_{j(k)}} = |(u', x, u_2)\rangle_{\mathcal{Z}_{j(k)}}$ und $|\overline{v}\rangle_{\mathcal{X}_{j(k)}} := |\overline{v}'\rangle_{\mathcal{X}_{j(k)}}$ zugeordnet ist, wenn die Pauli- Z $\otimes$ Z -Messkreise

auf die entsprechenden Qubits auf der rekursiven Ebene k - 1 angewendet wurden und andererseits den eingefrorenen Zuständen $|\pmb{u}\rangle_{Z_{j(k)}} = |\pmb{u}'\rangle_{Z_{j(k)}}$, und $|\overline{\pmb{v}}\rangle_{X_{j(k)}} = \overline{|(\pmb{v_1}, \pmb{z}, \pmb{v}')\rangle}_{X_{j(k)}}$, wenn die Pauli- $X \otimes X$ -Messkreise auf die entsprechenden Qubits der vorhergehenden rekursiven Ebene k - 1 angewendet wurden, wobei u' = $\pmb{u_1} \oplus \pmb{u_2}$, v' = $v_1 \oplus v_2$, $u_1, u_2 \in \{0, 1\}^{j_{(k-1)}}$, $v_1, v_2 \in \{0, 1\}^{K/2-i_{j(k-1)}}$, mit $i_{(k-1)} = i_{j(k)} - 2^{k-1}$, für Pauli- $Z \otimes Z$ -Messungen und mit $i_{j(k-1)} = i_{j(k)}$, für Pauli- $X \otimes X$ - Messungen, wobei die beiden äquivalenten Polarcodezustände $|q^1_{2^{k-1}}\rangle_{S^1_{j(k-1)}}$ und $|q^2_{2^{k-1}}\rangle_{S^2_{j(k-1)}}$ aus der vorhergehenden rekursiven Ebene *k* - 1, auf die die Pauli- $Z \otimes Z$ - *bzw.* Pauli- $X \otimes X$ - Messkreise *angewendet* wurden, den eingefrorenen Zuständen $|\pmb{u_1}\rangle_{Z_{j(k-1)}}$, $|v_1\rangle_{X_{j(k-1)}}$ und $|\pmb{u_2}\rangle_{Z_{j(k-1)}}$, $|v_2\rangle_{X_{j(k-1)}}$ zugeordnet waren, und wobei die Vektoren x und z auf Basis des Messergebnisses m der entsprechenden Pauli-Messkreise und der entsprechenden Polartransformation $P_{K/2}$ oder $P^{\mathrm{T}}_{K/2}$ geschätzt werden, wobei $x = P_{K/2}(m)|_{X_{j(k-1)}}$ verwendet wird, wenn die Pauli- $Z \otimes Z$ -Messkreise auf die entsprechenden Qubits auf der vorhergehenden rekursiven Ebene *k* - 1 angewendet wurden, und $\pmb{z} = P^{\mathrm{T}}_{K/2}(\pmb{m})|_{Z_{j(k-1)}}$, wenn die Pauli- $X \otimes X$ -Messkreise auf die entsprechenden Qubits der vorhergehenden rekursiven Ebene k - 1 angewendet wurden.

8. Verfahren zum Herstellen von Quantenpolarcodezuständen nach Anspruch 7, **dadurch gekennzeichnet, dass** das Herstellungsverfahren gemäß den folgenden Schritten fehlertolerant ist:

   - wenn die Pauli- $Z \otimes Z$ -Messkreise auf die entsprechenden Qubits auf der rekursiven Ebene *k* - 1 angewendet wurden, falls $P_{K/2}(m)|_{Z_{j(k-1)}} = u'$, dann wird der Vektor *x* unter Verwendung von $x = P_{K/2}(m)|_{X_{j(k-1)}}$ geschätzt, oder andernfalls wird er verworfen und das Verfahren durch Aufnahme neuer Polarcodezustände der Länge K/2 neu gestartet, und
   - wenn die Pauli- $X \otimes X$ -Messkreise auf die entsprechenden Qubits auf der rekursiven Ebene *k* - 1 angewendet wurden, falls $P^{\mathrm{T}}_{K/2}(\pmb{m})|_{X_{j(k-1)}} = \pmb{v}'$, dann wird der Vektor z unter der Verwendung von $\pmb{z} = P^{\mathrm{T}}_{K/2}(\pmb{m})|_{Z_{j(k-1)}}$ geschätzt, oder andernfalls wird er verworfen und das Verfahren durch Aufnahme neuer Polarcodezustände der Länge K/2 neu gestartet.

9. Verfahren zum Herstellen von Quantenpolarcodezuständen nach Anspruch 8, **dadurch gekennzeichnet, dass** die fehlertolerante Herstellung von Quantenpolarcodezuständen durch die Schätzung der Vektoren x und z dargestellt wird, wobei $\pmb{x} = (\pmb{x}|_{\mathcal{X''}}, \pmb{x}|_{\mathcal{X''_r}})$ bezogen auf die Sätze $\mathcal{X}_{j(k-1)} = \{i_{j(k-1)} + 1, ..., \frac{K}{2}\}$ $\mathcal{X''} := \{i_{j(k-1)} + 1, \cdots, i''\} \subseteq \mathcal{X}_{j(k-1)}$ und $\mathcal{X''_r} := \mathcal{X}_{j(k-1)} \backslash \mathcal{X''}$, wobei $i_{j(k-1)} \leq i'' \leq \frac{K}{2}$, , und wobei $\pmb{x}|_{\mathcal{X''_r}} = P_{K/2}(m)|_{\mathcal{X''_r}}$ und $\pmb{x}|_{\mathcal{X''}} = \mathrm{argmin}_{\pmb{a}|_{\mathcal{X''}}} \mathrm{wt}\,(\pmb{m} \oplus P_{K/2}(\pmb{u'}, \pmb{a}|_{\mathcal{X''}}, \pmb{x}|_{\mathcal{X''_r}})$ und wobei $\pmb{z} = (\pmb{z}|_{\mathcal{Z''_r}}, \pmb{z}|_{\mathcal{Z''}})$ bezogen auf die Sätze $\mathcal{Z}_{j(k-1)} = \{1, ..., i_{j(k-1)}\}$, $\mathcal{Z}'' := \{i'', ..., i_{j(k-1)}\} \subseteq \mathcal{Z}_{j(k-1)}$, und $\mathcal{Z}''_r := \mathcal{Z}_{j(k-1)} \setminus \mathcal{Z}''$, mit $1 \leq i'' \leq i_{j(k-1)} + 1$, unt wobei $\pmb{z}|_{\mathcal{Z''_r}} = P^{\mathrm{T}}_{K/2}(\pmb{m})|_{\mathcal{Z''_r}}$ und $\pmb{z}|_{\mathcal{Z''}} = \mathrm{argmin}_{\pmb{b}|_{\mathcal{Z''}}} \mathrm{wt}(\pmb{m} \oplus P_{K/2}(\pmb{z}|_{\mathcal{Z''_r}}, \pmb{b}|_{\mathcal{Z''}}, \pmb{v}))$.

10. Verfahren zum Herstellen von Quantenpolarcodezuständen nach Anspruch 9, **dadurch gekennzeichnet, dass,** wenn nicht eindeutig $\pmb{x}|_{\mathcal{X''}}$ ist, es verworfen wird und das Verfahren durch Aufnehmen neuer Polarcodezustände der Länge K/2neu gestartet wird, und dass, wenn nicht eindeutig $\pmb{z}|_{\mathcal{Z''}}$ ist, es verworfen wird und das Verfahren durch Aufnehmen neuer Polarcodezustände der Länge K/2neu gestartet wird.

11. Quantenrechensystem zum Herstellen von Quantenpolarcodezuständen, umfassend:

   - einen Satz von Einzelqubit-Pauli-Messkreisen (3), die so konfiguriert sind, dass sie ein anfängliches Quanten-

system $\mathcal{S} = \{1, ...,N\}$, von $N = 2^n$ Einzelqubit-Zuständen von Qubits des Systems herstellen, wobei die Zustände einer anfänglichen Quantenbasis zugeordnet sind,

- einen Satz von zwei Qubit-Pauli-Messschaltungen (7), die so konfiguriert sind, dass sie rekursiv einen Quantenpolarcode $|q_{2^n}\rangle_{\mathcal{S}}$ der Codelänge $N = 2^n$ herstellen, wobei auf jeder rekursiven Ebene $k$, wobei = 1 *to n,* ein Satz von $2^n/2^k$ Quantenpolarcodezuständen

$$\left\{ |q_{2^k}\rangle_{\mathcal{S}_{j(k)}}, j(k) \ = \ 1 \ bis \ 2^n/2^k \right\}$$

mit Codelängen $2^k$, referenziert durch entsprechende Sätze $\mathcal{S}_{j(k)}$ von Indizes, umfassend erste und zweite Sätze von eingefrorenen Indizes $\mathcal{Z}_{j(k)} = \{1_j, ..., i_{j(k)}\}$ und $\mathcal{X}_{j(k)} \ = \ \left\{ (i \ + \ 1)_{j(k)}, ..., 2^k_{j(k)} \right\}$, hergestellt wird, wobei jeder Quantenpolarcodezustand $|q_{2^k}\rangle_{\mathcal{S}_{j(k)}}$ durch Anwenden von zwei Qubit-Pauli- $P \otimes P$ - Messkreisen auf zwei äquivalente Polarcodezustände $|q^1_{2^{k-1}}\rangle_{\mathcal{S}^1_{j(k-1)}}$ und $|q^2_{2^{k-1}}\rangle_{\mathcal{S}^2_{j(k-1)}}$ hergestellt wird, die zur Ausgabe der vorhergehenden rekursiven Ebene $k$ - 1 gehören und durch zwei entsprechende Sätze von Indizes $\mathcal{S}^1_{j(k-1)}$ und $\mathcal{S}^2_{j(k-1)}$ referenziert werden, von denen jeder einen ersten und einen zweiten Satz von festgelegten Indizes $\mathcal{Z}_{j(k-1)}$ und $\mathcal{X}_{j(k-1)}$ umfasst, die jeweils der ersten und zweiten Quantenbasis entsprechen, wobei der Vorgänger der ersten rekursiven Ebene $k$ = 1 das anfängliche Quantensystem von Einzelqubit-Zuständen ist.

**12.** Rechensystem, umfassend ein klassisches Rechensystem (13), eine klassische Quantenschnittstelle (15) und ein Quantenrechensystem nach Anspruch 11, **dadurch gekennzeichnet, dass** das Quantenrechensystem (1) über die klassische Quantenschnittstelle (15) mit dem klassischen Rechensystem (13) gekoppelt ist.

**13.** Rechensystem nach Anspruch 12, **dadurch gekennzeichnet, dass** das klassische Rechensystem (13) einen Syndrom-Extraktor (17) und einen klassischen Decoder (19) umfasst, wobei der Syndrom-Extraktor (17) so konfiguriert ist, dass er ein Syndrom aus Quantenmessungen extrahiert, die von dem Quantenrechensystem implementiert werden, und der klassische Decoder (19) so konfiguriert ist, dass er den Quantenpolarcode durch Implementieren einer sukzessiven Aufhebungsdecodierung decodiert.

**Revendications**

**1.** Procédé de préparation d'états de code polaire quantique dans un système informatique quantique matérialisant des qubits, des portes quantiques et des circuits quantiques, comportant les étapes suivantes :

- la préparation (E1) d'un système quantique initial $\mathcal{S}$ = {1,...,N}, de $N = 2^n$ états à un seul qubit desdits qubits, lesdits états étant associés à une base quantique initiale,

- la préparation (E5) d'un code polaire quantique $|q_{2^n}\rangle_{\mathcal{S}}$ de longueur de code $N = 2^n$ référencé par des premier et second ensembles prédéterminés d'indices gelés Z = {1,...,i}, $\mathcal{X}$ = {i + 1,...,N} par rapport respectivement à des première et seconde bases quantiques, ledit code polaire quantique $|q_{2^n}\rangle_{\mathcal{S}}$ étant préparé par utilisation récursive de deux circuits (7) de mesure de Pauli de qubits P $\otimes$ P, dans lequel, à chaque niveau de récursivité $k$, où $k$ = 1 à $n$, la préparation d'un ensemble de $2^n/2^k$ états de code polaire quantique

$$\left\{|q_{2^k}\rangle_{\mathcal{S}_{j(k)}}, j(k) \ = \ 1 \text{ à } 2^n/2^k\right\}$$

de longueurs de code $2^k$, référencés par des ensembles correspondants $\mathcal{S}_{j(k)}$ d'indices comportant des premier et second ensembles d'indices gelés $\mathcal{Z}_{j(k)} = \{1, ..., i_{j(k)}\}$ et $\mathcal{X}_{j(k)} \ = \ \left\{(i+1)_{j(k)}, ..., 2^k_{j(k)}\right\}$, chaque état de code polaire quantique $|q_{2^k}\rangle_{\mathcal{S}_{j(k)}}$ étant préparé en appliquant deux circuits (7) de mesure de Pauli de qubits $P \otimes P$ sur deux états de code polaire équivalents $|q^1_{2^{k-1}}\rangle_{\mathcal{S}^1_{j(k-1)}}$ et $|q^2_{2^{k-1}}\rangle_{\mathcal{S}^2_{j(k-1)}}$ appartenant à la sortie du niveau de récursivité antécédent $k$ - 1 et référencés par deux ensembles correspondants d'indices $\mathcal{S}^1_{j(k-1)}$ et $\mathcal{S}^2_{j(k-1)}$ comportant chacun un premier et un second ensemble d'indices gelés $\mathcal{Z}_{j(k-1)}$ et $\mathcal{X}_{j(k-1)}$ correspondant respectivement à une première et une seconde base quantique, l'antécédent du premier niveau de récursivité $k$ = 1 étant ledit système quantique initial d'états à un seul qubit.

2. Procédé de préparation d'états de code polaire quantique selon la revendication 1, **caractérisé en ce que** ledit système quantique initial d'états à un seul qubit est préparé en appliquant un circuit de mesure de Pauli à un seul qubit P (3) sur chaque qubit d'une entrée prédéterminée d'états quantiques à $N$ qubits.

3. Procédé de préparation d'états de code polaire quantique selon la revendication 2, **caractérisé en ce que** ledit circuit de mesure de Pauli à un seul qubit est un circuit de mesure Z et ladite base quantique initiale est une base de calcul.

4. Procédé de préparation d'états de code polaire quantique selon l'une quelconque des revendications précédentes, **caractérisé en ce que** lesdites première et seconde bases quantiques sont respectivement des états de bases de calcul et de phase.

5. Procédé de préparation d'états de code polaire quantique selon l'une quelconque des revendications précédentes, **caractérisé en ce que**, au niveau de récursivité $k$, lesdits deux $|q^2_{2^{k-1}}\rangle_{\mathcal{S}^2_{j(k-1)}}$ circuits de mesure de Pauli de qubits $P \otimes P$ appliqués sur lesdits deux états de code polaire équivalents $|q^1_{2^{k-1}}\rangle_{\mathcal{S}^1_{j(k-1)}}$ et sont des circuits de mesure $Z \otimes Z$ lorsque le dernier indice $i_{j(k)}$ du premier ensemble correspondant d'indices $\mathcal{Z}_{j(k)} := \{1_j, ..., i_{j(k)}\}$ est supérieur à $2^{k-1}$ et sont des circuits de mesure $X \otimes X$ lorsque ledit dernier indice $i_{j(k)}$ est inférieur ou égal à $2^{k-1}$.

6. Procédé de préparation d'états de code polaire quantique selon la revendication 5, **caractérisé en ce que**, pour le dernier niveau de récursivité, $k = n$, l'indice correspondant $i_{j(n)} = i$ , où $i \in \mathcal{S} = \{1, ..., N\}$ est l'indice d'information sélectionné utilisé pour coder l'information quantique, et pour $k < n$, la valeur de $i_{j(k)} \in \{1, ..., K = 2^k\}$ est déterminée à partir de celle de $i_{j(k+1)} \in \{1, ..., 2K = 2^{k+1}\}$, de sorte que si $i_{j(k+1)} > K$, alors $i_{j(k)} = i_{j(k+1)} - K$, sinon $i_{j(k)} = i_{j(k+1)}$.

7. Procédé de préparation d'états de code polaire quantique selon la revendication 5 ou 6, **caractérisé en ce que**, pour tout niveau de récursivité $k$, le code polaire quantique $|q_{2^k}\rangle_{\mathcal{S}_{j(k)}}$ est associé d'une part, aux états gelés $|u\rangle_{\mathcal{Z}_{j(k)}} \ = \ |(u^{'}, x, u_2)\rangle_{\mathcal{Z}_{j(k)}}$, et $|\overline{v}\rangle_{\mathcal{X}_{j(k)}} := \ |\overline{v}'\rangle_{\mathcal{X}_{j(k)}}$ lorsque les circuits de mesure de Pauli $Z \otimes Z$ ont été appliqués sur les qubits correspondants au niveau de récursivité $k$ - 1, et d'autre part, aux états gelés $|u\rangle_{\mathcal{Z}_{j(k)}} \ = \ |u^{'}\rangle_{\mathcal{Z}_{j(k)}}$, et $|\overline{v}\rangle_{\mathcal{X}_{j(k)}} \ = \ |\overline{(v_1, z, v')}\rangle_{\mathcal{X}_{j(k)}}$ lorsque les circuits de mesure de Pauli $X \otimes X$ ont

été appliqués sur les qubits correspondants du niveau de récursivité précédent $k$ - 1, où $\boldsymbol{u'} = \boldsymbol{u_1} \oplus \boldsymbol{u_2}$, $\boldsymbol{v'} = v_1 \oplus \boldsymbol{v_2}$, $\boldsymbol{u_1}, \boldsymbol{u_2} \in \{0, 1\}^{i_{j(k-1)}}$, $\boldsymbol{v_1}, \boldsymbol{v_2} \in \{0, 1\}^{K/2 - i_{j(k-1)}}$ avec $i_{j(k-1)} = i_{j(k)} - 2^{k-1}$, pour les mesures de Pauli $Z \otimes Z$, et avec $i_{j(k-1)} = i_{j(k)}$, pour les mesures de Pauli $X \otimes X$, où les deux états de code polaire équivalents $|q^1_{2^{k-1}}\rangle_{S^1_{j(k-1)}}$ et $|q^2_{2^{k-1}}\rangle_{S^2_{j(k-1)}}$ du niveau de récursivité précédent $k$ - 1, sur lesquels les circuits de mesure de Pauli $Z \otimes Z$ ou les circuits de mesure de Pauli $X \otimes X$ ont été appliqués, étaient associés à des états gelés $|\boldsymbol{u_1}\rangle_{Z_{j(k-1)}}$, $|\boldsymbol{v_1}\rangle_{X_{j(k-1)}}$ et $|\boldsymbol{u_2}\rangle_{Z_{j(k-1)}}$, $|\boldsymbol{v_2}\rangle_{X_{j(k-1)}}$, respectivement, et où les vecteurs $x$ et $z$ sont estimés sur la base du résultat de mesure m des circuits de mesure de Pauli correspondants et de la transformation polaire $P_{K/2}$ ou $P^{\mathrm{T}}_{K/2}$ correspondante, en utilisant $\boldsymbol{x} = P_{K/2}(\boldsymbol{m})|_{X_{j(k-1)}}$ lorsque les circuits de mesure de Pauli $Z \otimes Z$ ont été appliqués sur les qubits correspondants au niveau de récursivité précédent $k$ - 1, et $\boldsymbol{z} = P^{\mathrm{T}}_{K/2}(\boldsymbol{m})|_{Z_{j(k-1)}}$ lorsque les circuits de mesure de Pauli $X \otimes X$ ont été appliqués sur les qubits correspondants du niveau de récursivité précédent $k$ - 1.

8. Procédé de préparation d'états de code polaire quantique selon la revendication 7, **caractérisé en ce que** le procédé de préparation est tolérant aux défauts selon les étapes suivantes :

   - lorsque les circuits de mesure de Pauli $Z \otimes Z$ ont été appliqués sur les qubits correspondants au niveau de récursivité $k$ - 1, si $P_{K/2}(\boldsymbol{m})|_{Z_{j(k-1)}} = \boldsymbol{u'}$, alors le vecteur $x$ est estimé à l'aide de $\boldsymbol{x} = P_{K/2}(\boldsymbol{m})|_{X_{j(k-1)}}$, sinon il est rejeté et la procédure est relancée en prenant de nouveaux états de code polaire de longueur $K/2$, et
   - lorsque les circuits de mesure de Pauli $X \otimes X$ ont été appliqués sur les qubits correspondants au niveau de récursivité $k$ - 1, si $P^{\mathrm{T}}_{K/2}(\boldsymbol{m})|_{X_{j(k-1)}} = \boldsymbol{v'}$, alors le vecteur $z$ est estimé à l'aide de $\boldsymbol{z} = P^{\mathrm{T}}_{K/2}(\boldsymbol{m})|_{Z_{j(k-1)}}$, sinon il est rejeté et la procédure est relancée en prenant de nouveaux états de code polaire de longueur K/2.

9. Procédé de préparation d'états de code polaire quantique selon la revendication 8, **caractérisé en ce que** la préparation tolérante aux défauts d'états de code polaire quantique est représentée par l'estimation des vecteurs $x$ et $z$ dans lequel, $\boldsymbol{x} = (\boldsymbol{x}|_{X''}, \boldsymbol{x}|_{X''_r})$ par rapport aux ensembles $X_{j(k-1)} = \{i_{j(k-1)} + 1, ..., \frac{K}{2}\}$, $X'' := \{i_{j(k-1)} + 1, \cdots, i''\} \subseteq X_{j(k-1)}$ et $X''_r := X_{j(k-1)} \backslash X''$ avec $i_{j(k-1)} \le i'' \le \frac{K}{2}$, , et où $\boldsymbol{x}|_{X''_r} = P_{K/2}(\boldsymbol{m})|_{X''_r}$ et $\boldsymbol{x}|_{X''} = \mathrm{argmin}_{\boldsymbol{a}|_{X''}} \mathrm{wt}(\boldsymbol{m} \oplus P_{K/2}(\boldsymbol{u'}, \boldsymbol{a}|_{X''}, \boldsymbol{x}|_{X''_r})$ et dans lequel, $\boldsymbol{z} = (\boldsymbol{z}|_{Z''_r}, \boldsymbol{z}|_{Z''})$ par rapport aux ensembles $Z_{j(k-1)} = \{1, ..., i_{j(k-1)}\}$, $Z'' := \{i'', ..., i_{j(k-1)}\} \subseteq Z_{j(k-1)}$, et $Z''_r := Z_{j(k-1)} \backslash Z''$, avec $1 \le i'' \le i_{j(k-1)} + 1$, et où $\boldsymbol{z}|_{Z''_r} = P^{\mathrm{T}}_{K/2}(\boldsymbol{m})|_{Z''_r}$ et $\boldsymbol{z}|_{Z''} = \mathrm{argmin}_{\boldsymbol{b}|_{Z''}} \mathrm{wt}(\boldsymbol{m} \oplus P_{K/2}(\boldsymbol{z}|_{Z''_r}, \boldsymbol{b}|_{Z''}, \boldsymbol{v}))$ .

10. Procédé de préparation d'états de code polaire quantique selon la revendication 9, **caractérisé en ce que** lorsque $\boldsymbol{x}|_{X''}$ n'est pas unique, il est rejeté et la procédure est redémarrée en prenant de nouveaux états de code polaire de longueur K/2 et de manière similaire, lorsque $\boldsymbol{z}|_{Z''}$ n'est pas unique, il est rejeté et la procédure est relancée en prenant de nouveaux états de code polaire de longueur K/2.

11. Système informatique quantique pour la préparation d'états de code polaire quantique, comportant :

   - un ensemble de circuits de mesure de Pauli à un seul qubit (3) configurés pour préparer un système quantique initial $S = \{1, ..., N\}$, de $N = 2^n$ états à un seul qubit de qubits dudit système, lesdits états étant associés à une base quantique initiale,
   - un ensemble de deux circuits (7) de mesure de Pauli de qubits configurés pour préparer de manière récursive un code polaire quantique $|q_{2^n}\rangle_S$ de longueur de code $N = 2^n$, dans lequel, à chaque niveau de récursivité $k$, où $k = 1$ *to* n, un ensemble de $2^n/2^k$ états de code polaire quantique

$$\left\{ |q_{2^k}\rangle_{\mathcal{S}_{j(k)}}, j(k) \;=\; 1 \text{ à } 2^n/2^k \right\}$$

de longueurs de code $2^k$, référencés par des ensembles correspondants $\mathcal{S}_{j(k)}$ d'indices comportant un premier et un second ensemble d'indices gelés $\mathcal{Z}_{j(k)} = \{1_{j}, ..., i_{j(k)}\}$ et $\mathcal{X}_{j(k)} = \left\{ (i+1)_{j(k)}, ..., 2^k_{j(k)} \right\}$ est préparé, chaque état de code polaire quantique $|q_{2^k}\rangle_{\mathcal{S}_{j(k)}}$ étant préparé par l'application de deux circuits de mesure de Pauli de qubits $P \otimes P$ sur deux états de code polaire équivalents $|q^1_{2^{k-1}}\rangle_{\mathcal{S}^1_{j(k-1)}}$ et $|q^2_{2^{k-1}}\rangle_{\mathcal{S}^2_{j(k-1)}}$ appartenant à la sortie du niveau de récursivité antécédent $k$ - 1 et référencé par deux ensembles d'indices correspondants $\mathcal{S}^1_{j(k-1)}$ et $\mathcal{S}^2_{j(k-1)}$ comportant chacun un premier et un second ensemble d'indices gelés $\mathcal{Z}_{j(k-1)}$ et $\mathcal{X}_{j(k-1)}$ correspondant respectivement aux première et seconde bases quantiques, l'antécédent du premier niveau de récursivité k = 1 étant ledit système quantique initial d'états à un seul qubit.

12. Système informatique comportant un système informatique classique (13), une interface classique-quantique (15), et un système informatique quantique selon la revendication 11, **caractérisé en ce que** le système informatique quantique (1) est couplé au système informatique classique (13) via l'interface classique-quantique (15).

13. Système informatique selon la revendication 12, **caractérisé en ce que** le système informatique classique (13) comporte un extracteur de syndrome (17) et un décodeur classique (19), l'extracteur de syndrome (17) étant configuré pour extraire un syndrome à partir de mesures quantiques mises en œuvre par le système informatique quantique, et le décodeur classique (19) étant configuré pour décoder le code polaire quantique en mettant en œuvre un décodage d'annulation successif.

FIG. 1

FIG. 2A

FIG. 2B

FIG. 3A

FIG. 3B

FIG. 4

FIG. 6A

FIG. 6B

FIG. 5

$$\left\{ |q_1\rangle_1, \text{---}, |q_1\rangle_N \right\}$$
$$N = 2^n$$

— E1

$$k = 1 \text{ to } n$$

— E2

$$|q_{2^k}\rangle_{S_{j(k)}}, j(k) = 1 \text{ to } 2^n/2^k$$

— E3

$$k = k+1$$

$$k < n$$

— E4

$$|q_N\rangle$$

— E5

# FIG. 7

FIG. 8A

FIG. 8B

FIG. 9A

FIG. 9B

FIG. 9C

FIG. 9D

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZUNAIRABABAR et al.** Polar Codes and Their Quantum-Domain Counterparts. *ARXIV.ORG*

- **M.A. NIELSEN** ; **I.L. CHUANG**. Quantum computation and quantum information. Cambridge University Press, 2016